(19) Europäisches Patentamt
European Patent Office
Office européen des brevets

(11)  **EP 2 464 861 B1**

(12)  **EUROPÄISCHE PATENTSCHRIFT**

(45) Veröffentlichungstag und Bekanntmachung des Hinweises auf die Patenterteilung:
**17.05.2017  Patentblatt 2017/20**

(21) Anmeldenummer: **10737008.2**

(22) Anmeldetag: **11.07.2010**

(51) Int Cl.:
*F03D 7/02* (2006.01)    *F03D 7/04* (2006.01)

(86) Internationale Anmeldenummer:
**PCT/EP2010/059948**

(87) Internationale Veröffentlichungsnummer:
**WO 2011/018284 (17.02.2011 Gazette 2011/07)**

(54) **VERFAHREN ZUM STEUERN EINER WINDKRAFTANLAGE**

WIND TURBINE CONTROL SYSTEM

PROCÉDÉ DE COMMANDE D'ÉOLIENNE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **14.08.2009  DE 102009026372**

(43) Veröffentlichungstag der Anmeldung:
**20.06.2012  Patentblatt 2012/25**

(73) Patentinhaber: **SSB Wind Systems GmbH & Co. KG**
**48499 Salzbergen (DE)**

(72) Erfinder: **BERTOLOTTI, Fabio**
**48455 Bad Bentheim (DE)**

(56) Entgegenhaltungen:
**EP-A1- 2 037 119      EP-A2- 0 995 904**
**DE-A1- 19 739 162**

**Beschreibung**

Die Erfindung betrifft ein Verfahren zum Steuern einer Windkraftanlage mit einem durch Wind angetriebenen und um eine horizontal oder im Wesentlichen horizontal ausgerichtete Rotorachse drehenden Rotor, der mehrere Rotorblätter umfasst, die sich jeweils in Richtung einer quer oder im Wesentlichen quer zur Rotorachse verlaufenden Blattachse erstrecken, um welche das jeweilige Rotorblatt gedreht wird, wobei der Rotor um eine vertikal oder im Wesentlichen vertikal ausgerichtete Gier-Achse mit einer Gier-Winkelgeschwindigkeit gedreht wird, wodurch gyroskopische Belastungen der Rotorblätter hervorgerufen werden. Ferner betrifft die Erfindung eine Windkraftanlage mit einem durch Wind antreibbaren und um eine horizontal oder im Wesentlichen horizontal ausgerichtete Rotorachse drehbaren Rotor, der mehrere Rotorblätter umfasst, die sich jeweils in Richtung einer quer oder im Wesentlichen quer zur Rotorachse verlaufenden Blattachse erstrecken, einem Gier-Winkelverstellantrieb, mittels welchem der Rotor um eine vertikal oder im Wesentlichen vertikal ausgerichtete Gier-Achse mit einer Gier-Winkelgeschwindigkeit drehbar ist, wobei durch das Drehen des Rotors um die Gier-Achse gyroskopische Belastungen der Rotorblätter hervorgerufen werden, und Blattwinkelverstellantrieben, mittels welchen die Rotorblätter um ihre Blattachsen drehbar sind. Ein Beispiel hierfür ist aus EP 0 995 904 A2 bekannt.

Moderne Windkraftanlagen, die mehrere Megawatt an elektrischer Leistung abgeben können und auch als Multi-Megawatt-Anlagen bezeichnet werden, umfassen drehbar an einem Rotor gelagerte Rotorblätter, sodass durch Änderungen der Blattwinkel relativ zum Rotor für jedes Rotorblatt der Anströmwinkel des Winds variiert werden kann.

Gemäß einem ersten Verfahren zum Betreiben einer Windkraftanlage wird ein einziger Blattwinkelfehler an alle Rotorblattsteuerungen abgegeben, sodass eine gemeinsame Änderung der Blattwinkel aller Rotorblätter erfolgt. Gemäß einem zweiten Verfahren zum Betreiben einer Windkraftanlage wird hingegen eine individuelle Blattwinkelsteuerung eingesetzt, welche auch als IPC bezeichnet wird, sodass die Blattwinkel für jedes Rotorblatt individuell eingestellt werden. Im Idealfall können durch den Einsatz einer IPC die Energiekosten verringert werden, da entweder die anfänglichen Investitionskosten als Folge einer Massenreduzierung von strukturellen Elementen der Windkraftanlage herabgesetzt werden können oder die jährliche Energieproduktion durch längere Rotorblätter erhöht werden kann.

Die IPC ist jedoch keine ausgereifte Technologie sondern Gegenstand laufender Entwicklungen. Ziel dieser Entwicklungen ist die Reduzierung von kurzzeitig an den Rotorblättern auftretenden Belastungen aufgrund von Schubbeanspruchungen und Turbulenzen des Winds. Bekannte und die IPC einsetzende Steuerungsstrategien zur Reduzierung solcher Belastungen basieren entweder auf der Auswertung von von einem oder mehreren Rotorblättern gewonnenen Belastungs-, Dehnungs- oder Beschleunigungssignalen oder auf der Auswertung von Deformationen der den Rotor tragenden Hauptwelle der Windkraftanlage.

Die US 6 361 275 B1 offenbart eine auf Blattbelastungs- bzw. auf Windgeschwindigkeitssensoren an der Blattoberfläche basierende, individuelle Blattwinkelsteuerung zum Reduzieren von durch lokale, temporäre Spitzen der Windgeschwindigkeit in Teilen des Rotorbereichs hervorgerufenen Belastungen.

Die WO 01/33075 A1 beschreibt eine auf mechanischen Belastungen an den Rotorblättern basierende, individuelle Blattwinkelsteuerung, um die Windkraftanlage näher an ihren Auslegungsgrenzen zu betreiben, ohne diese Grenzen zu überschreiten.

Gemäß der WO 2004/074681 A1 werden zum Verbessern der Stabilität der Windkraftanlage lokal vor jedem Rotorblatt Strömungseigenschaften gemessen (z.B. durch einen langen, sich nach vorne von dem Blatt wegerstreckenden und ein Anemometer tragenden Arm), sodass Ermüdungsbeanspruchungen und das Risiko von Rotorblatt-Turm-Wechselwirkungen reduziert werden.

Die WO 2008/041066 A1 offenbart eine individuelle Blattwinkelsteuerung zum Verringern von Momenten, die durch Windschub und Fehlanpassungen des Gier-Winkels hervorgerufen werden, wobei die Blattwinkelsteuerung in Abhängigkeit von gemessenen, auf die Rotorblätter wirkenden Momenten erfolgt, um die Abweichung der gemessenen Momente von einem Sollwert (der in einem Speicher abgelegt ist) zu reduzieren.

Die WO 2008/087180 A2 beschreibt eine individuelle Blattwinkelsteuerung zum Verringern asymmetrischer Belastungen des Rotors, wobei die Blattwinkelsteuerung in Abhängigkeit von gemessenen Deformationen der Hauptwelle erfolgt (Messung mit Dehnungsmessstreifen).

US 7 118 339 B2 offenbart eine individuelle Blattwinkelsteuerung sowie eine Gier-Winkelsteuerung, die auf Rotorblatt-Belastungsmessungen bzw. auf Hauptwellen-Versatzmessungen basieren, sodass die Windkraftanlage durch Gieren in eine günstige Ausrichtung gebracht wird, wobei die individuelle Blattwinkelsteuerung zum Reduzieren von zusätzlichen, asymmetrischen Rotorbelastungen (d.h. Ermüdungsbeanspruchungen) eingesetzt wird. Ferner wird der Betrieb der Windkraftanlage mit einem vorgegebenen Gier-Winkelfehler offenbart, um asymmetrischen Rotorbelastungen entgegenzuwirken.

Die WO 2008/119351 A2 beschreibt eine individuelle Blattwinkelsteuerung zum Erzeugen eines Rotormoments, welches dem Schwerkraftmoment entgegenwirkt, sodass die Belastungen der Hauptwellenlager reduziert werden.

Nach den oben genannten Druckschriften wird versucht, die Energiekosten auf indirekte Weise zu senken, indem die Ermüdungsbeanspruchungen verringert werden, sodass die strukturelle Belastbarkeit der Windkraftanlage (z.B. durch Gewichtsreduzierung) verringert werden kann. Um eine Verringerung der strukturellen Belastbarkeit zulassen zu können, müssen aber auch andere Belastungen, wie z.B. extreme Wetterbelastungen, welchen die Windkraftanlage während ihrer Lebensdauer ausgesetzt ist, abnehmen. Andernfalls gehen die mit der IPC erzielbaren Vorteile ganz oder teilweise verloren. Aus diesen und aus anderen Gründen wird die IPC heute nicht auf kommerzieller Ebene eingesetzt.

Somit besteht Bedarf an einem IPC-System, mittels welchem die Energiekosten gesenkt werden können und welches bei minimalen Änderungen des Windkraftanlagenaufbaus mit einem aktuellen Anlagen-Design einsetzbar ist.

Ein anderes Gebiet im Zusammenhang mit dem Betrieb von Windkraftanlagen, welches allerdings nicht Gegenstand der oben genannten Druckschriften ist, betrifft die Auswirkung von Gier-Winkelfehlern. Der Gier-Winkelfehler ist als Winkel zwischen der Windrichtung und der Rotorachse definiert. Allerdings wird die vertikale Komponente der Windgeschwindigkeit bei der Ermittlung des Gier-Winkelfehlers nicht berücksichtigt, da die Neigung der Rotorachse während des Betriebs der Windkraftanlage nicht geändert werden kann (eine Aufwärtsneigung der Rotorachse von z.B. 5° ist typisch für kommerzielle Windkraftanlagen). Zur Bestimmung des Gier-Winkelfehlers wird somit nur die in der horizontalen Ebene liegende Komponente der Windgeschwindigkeit berücksichtigt. Durch Gieren des Rotors der Windkraftanlage kann der Gier-Winkelfehler auf null reduziert werden (bei stetigen Windbedingungen).

Die WO 2008/143009 A1 offenbart eine individuelle Blattwinkelsteuerung zum Erzeugen von an den Rotorblättern angreifenden Kräften, die ein Gier-Moment zum Gieren der Windkraftanlage erzeugen. Somit kann auf Gier-Antriebe ganz oder teilweise verzichtet werden, wodurch elektrische Leistungsverluste reduzierbar sind. Die Nutzbarkeit von an den Rotorblättern angreifenden Kräften zum Erzeugen des Gier-Moments unterliegt aber der sporadischen und stochastischen Natur des Winds, einschließlich der Wirkung von Turbulenzen, sodass präzise und zeitgerechte Gier-Vorgänge nicht möglich sind. Um eine kontrollierbarere Gier-Bewegung auf Basis dieser Kräfte zu erzielen, wird die Gier-Bewegung während des gesamten Gier-Vorgangs durch ein Bremssystem gedämpft. Diese Dämpfung reduziert aber deutlich die Geschwindigkeit der Gier-Bewegung, sodass die Reibungskräfte des Bremssystems durch erhöhte, zyklische Blattbelastungen überwunden werden müssen, was für die Lebensdauer der Windkraftanlage schädlich und somit unerwünscht ist. Auch hebt der mit der erhöhten Aktivität des Blattwinkelverstellantriebs verbundene, zusätzliche elektrische Leistungsverlust die Vorteile auf, die mit dem geringeren Leistungsverlust des Gier-Antriebs verbunden sind. Abgesehen davon muss die Windkraftanlage bei Windstille zum Entwickeln von Kabeln gieren können, sodass der Wunsch nach einer Eliminierung des elektrischen Gier-Systems in der Praxis nicht realisierbar ist.

Die Gier-Rate derzeitiger, kommerzieller Multi-Megawatt-Anlagen liegt wegen unerwünschter und schädlicher gyroskopischer Rotorblattbelastungen, die während des Gierens auftreten, unterhalb eines Werts von 0,7°/s (meistens sogar unterhalb von 0,5°/s). Diese gyroskopischen Belastungen steigen linear mit der Gier-Rate, sodass eine Begrenzung der Gier-Rate auch die gyroskopischen Belastungen begrenzt. Die Gier-Rate wird auch als Gier-Winkelgeschwindigkeit bezeichnet.

Detaillierte Messungen des Gier-Winkelfehlers an einsatzbereiten, kommerziellen Multi-Megawatt-Anlagen, wie sie z.B. in dem Bericht Risø-R-1654 (EN) von T.F. Pedersen, N.N. Sørensen, L. Vita und P. Enevoldsen (2008) mit dem Titel "Optimization of Wind Turbine Operation by Use of Spinner Anemometer" beschrieben werden, zeigen, dass der Gier-Winkelfehler Momentanwerte von über 30° erreicht, und dass Abweichungen von bis zu 4°/s über eine signifikante Zeitdauer auftreten. Diese Winkelgeschwindigkeit liegt deutlich über der Grenze von 0,4°/s bis 0,6°/s derzeitiger, kommerzieller Multi-Megawatt-Anlagen. Folglich können aktuelle Windkraftanlagen den Änderungen der Windrichtung nicht folgen und werden kontinuierlich unter signifikanten Gier-Winkelfehlern betrieben. Typische Windkraftanlagensteuerungen erlauben einen Gier-Winkelfehler von etwa 25° bis 30°, wenn der Gier-Winkelfehler über eine Zeitdauer von 5 bis 15 Sekunden gemittelt wird, einen Gier-Winkelfehler von 10° bis 15°, wenn der Gier-Winkelfehler über eine Minute gemittelt wird und einen Gier-Winkelfehler von 3° bis 6°, wenn der Gier-Winkelfehler über 10 Minuten oder länger gemittelt wird.

Somit besteht Bedarf an einer Möglichkeit, moderne Multi-Megawatt-Anlagen bei reduzierten oder kleinen Gier-Winkelfehlern kontinuierlich betreiben zu können. Die Verringerung des Gier-Winkelfehlers ermöglicht eine erhöhte Energieaufnahme, wenn die Windkraftanlage unterhalb der Nenngeschwindigkeit betrieben wird. Ferner verringert eine Reduzierung des Gier-Winkelfehlers Biegebelastungen an den Rotorblättern, die durch asymmetrische Windbedingungen über die von dem Rotor überstrichene Fläche hervorgerufen werden, wenn die Windkraftanlage oberhalb der Nenngeschwindigkeit betrieben wird.

Die aus dem Stand der Technik bekannten Lösungen mit individueller Blattwinkelsteuerung auf Basis von Blattbelastungen oder Blattbeschleunigungen können nicht erfolgreich zur Reduzierung von gyroskopischen Belastungen eingesetzt werden. Zum einen rufen Windturbulenzen Änderungen der Blattbelastungen und Blattbeschleunigungen hervor, wodurch das Einsetzen gyroskopischer Belastungen verdeckt wird. Zum anderen eilen die gyroskopischen Blattbelastungen der Blattwinkelverstellung wegen der Trägheit der Rotorblätter (zeitlich) nach. Dies führt in beiden Fällen zu einer verzögerten und ineffektiven Blattwinkelverstellung in Bezug auf die Reduzierung gyroskopischer Belastungen.

Die US 2009/0068013 A1 offenbart ein Verfahren zum Reduzieren von auf ein Gier-System einer Windkraftanlage aufgrund von Gier-Momenten wirkenden Belastungen, wobei die Gier-Momente in das Gier-System durch einen Rotor eingeleitet werden, der ein Rotorblatt mit einem Blattwinkelverstellsystem umfasst. Das in das Gier-System mittels des Rotors eingeleitete Gier-Moment wird bestimmt, wobei auf Basis des erfassten Gier-Moments ein Blattwinkel des Rotorblatts derart eingestellt wird, dass das bestimmte Gier-Moment reduziert wird.

Nach diesem Verfahren werden nicht die durch einen Gier-Vorgang hervorgerufenen gyroskopischen Belastungen der einzelnen Rotorblätter, sondern die um die Gier-Achse wirkenden und an das Gier-System angreifenden Momente reduziert. Insbesondere sollen durch Drehen der Rotorblätter um ihre Blattachsen in Abhängigkeit von einem Sollwert für das Gier-Moment aerodynamische Belastungen des Gier-Systems reduziert werden.

Ausgehend hiervon liegt der Erfindung die Aufgabe zugrunde, eine Möglichkeit zu schaffen, den Gier-Winkelfehler bei einer Windkraftanlage möglichst rasch reduzieren zu können.

Diese Aufgabe wird erfindungsgemäß durch ein Verfahren nach Anspruch 1 und durch eine Windkraftanlage nach Anspruch 12 gelöst. Bevorzugte Weiterbildungen der Erfindung sind in den Unteransprüchen gegeben.

Nach dem erfindungsgemäßen Verfahren zum Steuern einer Windkraftanlage mit einem durch Wind angetriebenen und um eine horizontal oder im Wesentlichen horizontal ausgerichtete Rotorachse drehenden Rotor, der mehrere Rotorblätter umfasst, die sich jeweils in Richtung einer quer oder im Wesentlichen quer zur Rotorachse verlaufenden Blattachse erstrecken, um welche das jeweilige Rotorblatt gedreht wird, wird der Rotor um eine vertikal oder im Wesentlichen vertikal ausgerichtete Gier-Achse mit einer Gier-Winkelgeschwindigkeit gedreht, wodurch gyroskopische Belastungen der Rotorblätter hervorgerufen werden, wobei durch Drehen der Rotorblätter um ihre Blattachsen in Abhängigkeit von der Gier-Winkelgeschwindigkeit oder von einer diese beeinflussenden Führungsgröße die gyroskopischen Belastungen der Rotorblätter reduziert werden. Die Gier-Winkelgeschwindigkeit ist die Winkelgeschwindigkeit, mit welcher der Rotor um die Gier-Achse dreht und wird auch als Gier-Rate bezeichnet.

Durch das Drehen der Rotorblätter um ihre Blattachsen in Abhängigkeit von der Gier-Winkelgeschwindigkeit oder von der Führungsgröße ist es möglich, aerodynamische Belastungen der Rotorblätter hervorzurufen, die den durch die Gier-Bewegung des Rotors hervorgerufen, gyroskopischen Belastungen der Rotorblätter entgegenwirken. Die aerodynamischen Belastungen basieren auf aerodynamischen Wechselwirkungen zwischen dem Wind und den Rotorblättern und sind von den Winkeln abhängig, unter welchen die Rotorblätter von dem Wind angeströmt werden (Anströmwinkel). Die Anströmwinkel sind aber durch Drehen der Rotorblätter um ihre Längsachsen variierbar. Da diese Drehung gemäß der Erfindung in Abhängigkeit von der Gier-Winkelgeschwindigkeit oder von der Führungsgröße erfolgt, von der die Gier-Winkelgeschwindigkeit beeinflusst wird, können die gyroskopischen Belastungen ganz oder teilweise durch die aerodynamischen Belastungen kompensiert werden, sodass die Gier-Winkelgeschwindigkeit gegenüber herkömmlichen Windkraftanlagen deutlich erhöht werden kann.

Insbesondere werden somit durch das Drehen des Rotors um die Gier-Achse hervorgerufene, gyroskopische Belastungen der Rotorblätter durch das Drehen der Rotorblätter um ihre Blattachsen in Abhängigkeit von der Gier-Winkelgeschwindigkeit oder der Führungsgröße reduziert. Diese Reduzierung kann teilweise oder vollständig erfolgen.

Bei den aerodynamischen Belastungen handelt es sich vorzugsweise um Kräfte und/oder Momente. Ferner handelt es sich bei den gyroskopischen Belastungen vorzugsweise um Kräfte und/oder Momente.

In der US 2009/0068013 A1 wird zwar neben dem Drehen der Rotorblätter um ihre Blattachsen in Abhängigkeit von einem Sollwert für das Gier-Moment auch das Drehen der Rotorblätter um ihre Blattachsen in Abhängigkeit von der GierGeschwindigkeit beschrieben, aber lediglich im Zusammenhang mit einem konstanten Haltemoment eines Gier-Antriebs oder einer konstanten Haltereibung einer Reibungsbremse. Folglich soll der Rotor nicht um die Gier-Achse drehen, sondern in seiner Position verharren, wobei der Gier-Antrieb lediglich auf an das Gier-System angreifende aerodynamische Störmomente reagiert. Durch Drehungen des Rotors um die Gier-Achse hervorgerufene gyroskopische Belastungen der Rotorblätter sind daher relativ gering, sodass eine Reduzierung dieser Belastungen nicht geboten ist und in der US 2009/0068013 A1 auch nicht offenbart wird.

Bevorzugt wird die Gier-Winkelgeschwindigkeit in Abhängigkeit von der Führungsgröße gesteuert oder geregelt. Insbesondere bildet die Führungsgröße einen Sollwert für die Gier-Winkelgeschwindigkeit.

Da die Rotorblätter um die Rotorachse drehen, können auch aerodynamische Belastungen der Rotorblätter auftreten, die nicht zum Kompensieren der gyroskopischen Belastungen geeignet sind. Solche Belastungen können den Rotor zusätzlich belasten und sind unerwünscht. Bevorzugt wird somit jedes Rotorblatt um seine Blattachse zusätzlich in Abhängigkeit von einem Rotationswinkel gedreht, den die jeweilige Blattachse mit einer vertikal oder im Wesentlichen vertikal ausgerichteten Geraden einschließt, die insbesondere in Richtung der Gier-Achse verläuft. Vorzugsweise wird jedes Rotorblatt um seine Blattachse zusätzlich in Abhängigkeit von dem Kosinus aus einem Winkel gedreht, der gleich dem jeweiligen Rotationswinkel oder gleich einer Summe aus dem jeweiligen Rotationswinkel und einem Phasenversatz für das jeweilige Rotorblatt ist. Der Phasenversatz kann für alle Rotorblätter gleich sein oder von Rotorblatt zu Rotorblatt variieren. Da der Sinus durch Phasenverschiebung in den Kosinus überführbar ist, kann anstelle des Kosinus auch der Sinus verwendet werden, insbesondere unter Berücksichtigung der Phasenverschiebung.

Bevorzugt werden die Rotorblätter um ihre Blattachsen zusätzlich in Abhängigkeit von einer von dem Wind an den Rotor abgegebenen und/oder abzugebenden Leistung gedreht. Dieser Vorgang wird auch als "Pitchen" bezeichnet. Insbesondere wird durch das Pitchen die Leistung gesteuert oder geregelt. Somit ist es möglich, die Windkraftanlage während des Gierens normal weiter zu betreiben, welches durch das gleichzeitige Erzeugen der aerodynamischen Belastungen mit einer hohen Gier-Rate erfolgt. Insbesondere wird die Drehung der Rotorblätter in Abhängigkeit von der Leistung der Drehung der Rotorblätter zur Reduzierung der gyroskopischen Belastungen, vorzugsweise additiv, überlagert.

Bevorzugt wird die Windrichtung gemessen, in welcher der Rotor von dem Wind angeströmt wird. Ferner wird bevorzugt ein Gier-Winkel gemessen, um welchen der Rotor um die Gier-Achse verdreht ist. Insbesondere wird aus der Windrichtung und dem Gier-Winkel ein Gier-Winkelfehler bestimmt, welcher eine Winkelabweichung zwischen der Richtung der Rotorachse und der Windrichtung beschreibt. Der Gier-Winkelfehler ist z.B. als Winkel zwischen der Richtung der Rotorachse und der Windrichtung definiert. Üblicherweise ist die Rotorachse aber geringfügig gegenüber der Horizontalen nach oben geneigt, wobei diese Neigung während des Betriebs der Windkraftanlage in der Regel nicht veränderbar ist. Somit entspricht der Gier-Winkelfehler bevorzugt einem Winkel, der zwischen einer Projektion der Richtung der Rotorachse auf eine horizontale oder im Wesentlichen horizontale Ebene und der Windrichtung oder einer Projektion der Windrichtung auf diese Ebene eingeschlossenen ist. Die Ebene verläuft insbesondere senkrecht zur Gier-Achse. Bei Rotoren großen Durchmessers kann die Windrichtung lokal variieren, sodass es sich bei der Windrichtung auch um eine resultierende oder örtliche gemittelte Windrichtung im Bereich des Rotors oder um eine Windrichtung handeln kann, die an einem definierten Ort im Bereich des Rotors erfasst wird.

Die Führungsgröße wird insbesondere bestimmt. Bevorzugt wird die Führungsgröße in Abhängigkeit von dem Gier-Winkelfehler und/oder von der Gier-Winkelfehlerrate bestimmt. Insbesondere ist Führungsgröße proportional zu oder linear abhängig von der Gier-Winkelfehlerrate, die als zeitliche Ableitung des Gier-Winkelfehlers definiert ist. Bevorzugt wird ein maximaler Schwellenwert definiert, den die Führungsgröße nicht überschreitet, sodass eine Überlastung der Windkraftanlage vermieden werden kann.

Die Gier-Winkelgeschwindigkeit wird insbesondere gemessen oder auf Basis einer Messung der Drehbewegung des Rotors um die Gier-Achse ermittelt.

Verdrehungen der Rotorblätter um ihre Blattachsen werden insbesondere jeweils durch einen Blattwinkel und/oder dessen Änderung beschrieben. Bevorzugt erfolgt somit das Drehen der Rotorblätter durch Steuern oder Regeln der Blattwinkel in Abhängigkeit von der Gier-Winkelgeschwindigkeit oder von der Führungsgröße. Gemäß einer Ausgestaltung der Erfindung wird für jedes Rotorblatt ein von der Gier-Winkelgeschwindigkeit oder von der Führungsgröße abhängiger Soll-Blattwinkel bestimmt, wobei der Blattwinkel für jedes Rotorblatt in Abhängigkeit von dem jeweiligen Soll-Blattwinkel gesteuert oder geregelt wird. Insbesondere bildet jeder Soll-Blattwinkel einen Sollwert für den Blattwinkel des jeweiligen Rotorblatts. Vorzugsweise wird der Blattwinkel jedes Rotorblatts gemessen.

Bevorzugt ist jeder der Soll-Blattwinkel linear abhängig von der Gier-Winkelgeschwindigkeit oder von der Führungsgröße. Insbesondere wird jeder der Soll-Blattwinkel durch eine Summe aus mehreren Summanden gebildet, von denen einer abhängig von, insbesondere linear abhängig von oder proportional zu, der Gier-Winkelgeschwindigkeit oder der Führungsgröße ist. Vorzugsweise ist dieser eine Summand zusätzlich abhängig von der Rotordrehgeschwindigkeit oder Rotorwinkelgeschwindigkeit und/oder von der Windgeschwindigkeit und/oder von dem Rotationswinkel des jeweiligen Rotorblatts, den dessen Blattachse mit einer vertikal oder im Wesentlichen vertikal ausgerichteten Geraden einschließt, die insbesondere in Richtung der Gier-Achse verläuft. Dieser eine Summand bildet somit einen Kompensationsterm zum Erzeugen der aerodynamischen Belastungen, mit welchen die gyroskopischen Belastungen ganz oder teilweise kompensiert werden.

Ein anderer der Summanden ist vorzugsweise abhängig von der von dem Wind an den Rotor abgegebenen und/oder abzugebenden Leistung und bildet somit einen Leistungsterm, der vorzugsweise durch die Leistungsregelung der Windkraftanlage bestimmt oder mitbestimmt wird. Der Leistungsterm beschreibt insbesondere das "Pitchen" der Rotorblätter und ist somit auch für einen normalen Betrieb der Windkraftanlage charakteristisch. Dies ist erwünscht, da die Windkraftanlage während des Gierens bevorzugt weiter betrieben wird. Vorzugsweise wird die Drehung der Rotorblätter zum Erzeugen der aerodynamischen Belastungen der Drehung der Rotorblätter zum Steuern oder Regeln der von dem Wind an den Rotor abgegebenen Leistung, insbesondere additiv, überlagert. Die Summe kann einen oder mehrere zusätzliche Summanden umfassen, die z.B. zum Ausregeln einer oder mehrerer anderer Störgrößen dienen.

Bevorzugt wird von dem Rotor ein elektrischer Generator angetrieben, mittels welchem elektrische Energie erzeugt wird. Diese Energie wird vorzugsweise an ein elektrisches Netz abgegeben.

Die Erfindung betrifft ferner eine Windkraftanlage mit einem durch Wind antreibbaren und um eine horizontal oder im Wesentlichen horizontal ausgerichtete Rotorachse drehbaren Rotor, der mehrere Rotorblätter umfasst, die sich jeweils in Richtung einer quer oder im Wesentlichen quer zur Rotorachse verlaufenden Blattachse erstrecken, einem Gier-Winkelverstellantrieb, mittels welchem der Rotor um eine vertikal oder im Wesentlichen vertikal ausgerichtete Gier-Achse mit einer Gier-Winkelgeschwindigkeit drehbar ist, wobei durch das Drehen des Rotors um die Gier-Achse gyroskopische Belastungen der Rotorblätter hervorgerufen werden, Blattwinkelverstellantrieben, mittels welchen die Rotorblätter um ihre Blattachsen drehbar sind, und einer den Gier-Winkelverstellantrieb und die Blattwinkelverstellantriebe umfassenden Steuereinrichtung, mittels welcher durch Drehen der Rotorblätter um ihre Blattachsen in Abhängigkeit von der Gier-Winkelgeschwindigkeit oder von einer diese beeinflussenden Führungsgröße die gyroskopischen Belastungen der Rotorblätter reduzierbar sind.

Die erfindungsmäße Windkraftanlage kann gemäß allen im Zusammenhang mit dem erfindungsgemäßen Verfahren beschriebenen Ausgestaltungen weitergebildet sein. Insbesondere wird das erfindungsgemäße Verfahren mit der erfindungsmäßen Windkraftanlage ausgeführt.

Durch Drehen des Rotors um die Gier-Achse hervorgerufene, gyroskopische Belastungen der Rotorblätter sind insbesondere durch Drehen der Rotorblätter um ihre Blattachsen in Abhängigkeit von der Gier-Winkelgeschwindigkeit oder der Führungsgröße reduzierbar. Diese Reduzierung ist teilweise oder vollständig durchführbar.

Bevorzugt ist die Gier-Winkelgeschwindigkeit mittels der Steuereinrichtung in Abhängigkeit von der Führungsgröße steuerbar oder regelbar.

Gemäß einer Weiterbildung der Erfindung ist mittels der Steuereinrichtung jedes Rotorblatt um seine Blattachse zusätzlich in Abhängigkeit von einem Rotationswinkel drehbar, den die jeweilige Blattachse mit einer vertikal oder im Wesentlichen vertikal ausgerichteten Geraden einschließt, die insbesondere in Richtung der Gier-Achse verläuft, wobei die Steuereinrichtung eine Rotationswinkelerfassungseinrichtung umfasst, mittels welcher für zumindest eines der Rotorblätter der Rotationswinkel erfassbar ist. Da die Winkel, welche die Rotorblätter miteinander um die Rotorachse einschließen, für die Windkraftanlage in der Regel feststehen, reicht die Erfassung eines Rotationswinkels aus, da aus diesem die restlichen Rotationswinkel berechnet werden können. Vorzugsweise sind die Rotorblätter rings der Rotorachse gleichmäßig verteilt angeordnet, sodass ausgehend von dem erfassten Rotationswinkel $\beta_1$ für ein erstes Rotorblatt der Rotationswinkel $\beta n$ für das n-te Rotorblatt mit der Formel $\beta n = \beta 1 + (n-1) * 360° / N$ berechnet werden kann, wobei n eine natürliche Zahl und N die Rotorblätteranzahl ist. Es ist aber auch möglich, für alle Rotorblätter die Rotationswinkel zu messen. Die Rotationswinkelerfassungseinrichtung weist bevorzugt wenigstens einen Winkelsensor auf, mittels welchem der Rotationswinkel wenigstens eines der Rotorblätter erfassbar ist.

Mit dem Rotor ist bevorzugt ein elektrischer Generator gekoppelt, der von dem Rotor antreibbar ist. Mittels des Generators ist elektrische Energie erzeugbar, die vorzugsweise an ein elektrisches Netz abgebbar ist.

Die Steuereinrichtung umfasst bevorzugt eine Leistungserfassungseinrichtung, mittels welcher eine von dem Wind an den Rotor abgegebene Leistung erfassbar oder ermittelbar ist, wobei die Rotorblätter mittels der Steuereinrichtung um ihre Blattachsen zusätzlich in Abhängigkeit von der Leistung drehbar sind. Die Leistungserfassungseinrichtung umfasst bevorzugt einen Windgeschwindigkeitssensor, mittels welchem die Windgeschwindigkeit im Bereich des Rotors erfassbar ist. Aus der Windgeschwindigkeit ist insbesondere die Leistung ableitbar, die von dem Wind an den Rotor abgegeben wird (aerodynamische Leistung).

Die Steuereinrichtung umfasst bevorzugt einen Windrichtungssensor, mittels welchem die Windrichtung erfassbar ist. Insbesondere ist mit dem Windrichtungssensor die horizontale Komponente der Windrichtung erfassbar oder ermittelbar. Windrichtungssensor kann durch den Windgeschwindigkeitssensor gebildet oder separat von diesem vorgesehen sein.

Die Steuereinrichtung umfasst bevorzugt einen Gier-Winkelsensor, mittels welchem der Gier-Winkel erfassbar ist. Die Steuereinrichtung kann somit den Gier-Winkelfehler aus der Windrichtung oder aus deren horizontaler Komponente und dem Gier-Winkel berechnen. Insbesondere wird mittels der Steuereinrichtung die Führungsgröße in Abhängigkeit von dem Gier-Winkelfehler bestimmt.

Bevorzugt umfasst die Steuereinrichtung eine Gier-Ratenerfassungseinrichtung, mittels welcher die Gier-Winkelgeschwindigkeit erfassbar oder ermittelbar ist. Die Gier-Ratenerfassungseinrichtung kann den Gier-Winkelsensor umfassen und z.B. die Gier-Winkelgeschwindigkeit aus mehreren, zu bekannten Zeitpunkten erfassten Gier-Winkeln berechnen. Ergänzend oder alternativ umfasst die Gier-Ratenerfassungseinrichtung einen Gier-Ratensensor mittels welchem die Gier-Winkelgeschwindigkeit erfassbar ist. In diesem Fall kann die Gier-Ratenerfassungseinrichtung separat von dem Gier-Winkelsensor vorgesehen sein.

Verdrehungen der Rotorblätter um ihre Blattachse sind bevorzugt jeweils durch einen Blattwinkel beschreibbar. Gemäß einer Weiterbildung der Erfindung ist mittels der Steuereinrichtung für jedes Rotorblatt ein von der Gier-Winkelgeschwindigkeit oder von der Führungsgröße abhängiger Soll-Blattwinkel bestimmbar, wobei der Blattwinkel für jedes Rotorblatt in Abhängigkeit von dem jeweiligen Soll-Blattwinkel mittels der Steuereinrichtung steuerbar oder regelbar ist. Die Steuereinrichtung umfasst bevorzugt Blattwinkelsensoren, mittels welchen die Blattwinkel erfassbar sind.

Gemäß einer Ausgestaltung der Erfindung umfasst die Steuereinrichtung wenigstens eine Blattwinkelsteuereinheit, mittels welcher die Blattwinkelverstellantriebe steuerbar sind, und eine Gier-Winkelsteuereinheit, mittels welcher der Gier-Winkelverstellantrieb steuerbar ist. Insbesondere umfasst die Steuereinrichtung eine Hauptsteuereinheit, mittels welcher die Blattwinkelsteuereinheit und die Gier-Winkelsteuereinheit ansteuerbar sind. Die Blattwinkelverstellantriebe, der Gier-Winkelverstellantrieb, die Blattwinkelsteuereinheit, die Gier-Winkelsteuereinheit und/oder die Hauptsteuereinheit können an unterschiedlichen Orten der Windkraftanlage angeordnet sein.

Bevorzugt umfasst die Windkraftanlage einen Turm, einen an dem Turm um die Gier-Achse drehbar gelagerten Maschinenträger, und eine um die Rotorachse drehbar am Maschinenträger gelagerte Rotorwelle, die drehfest mit einer Nabe des Rotors verbunden ist, an der die Rotorblätter um ihre Blattachsen drehbar gelagert sind, wobei der Generator mit der Rotorwelle gekoppelt und von dem Rotor antreibbar ist. Vorzugsweise ist der Generator am Maschinenträger befestigt. Der Turm steht insbesondere auf einem Fundament. Bevorzugt ist Maschinenträger an einem oberen und/oder dem Fundament abgewandten Ende des Turms um die Gier-Achse drehbar am Turm gelagert.

Zusammengefasst betrifft die Erfindung eine Windkraftanlage und ein Verfahren zum Steuern derselben, wobei durch das Gieren hervorgerufene gyroskopische Belastungen kompensiert werden. Dadurch ist eine hohe Gier-Rate möglich, sodass der Gier-Winkelfehler reduziert oder eliminiert wird. Die Gier-Rate kann bei 4°/s und darüber liegen. Ferner kann die Windkraftanlage ein aktuelles, kommerzielles Design aufweisen, ohne dass größere Änderungen am Aufbau der Windkraftanlage (Rotorblätter, Rotor, Antriebsstrang, Maschinenträger, Turm) erforderlich sind. Eine Erhöhung von schädlichen und unerwünschten Blattbelastungen kann vermieden werden.

Gemäß einer Ausgestaltung des erfindungsgemäßen Verfahrens wird der Winkel zwischen der Windrichtung und der Richtung der Rotorachse oder zwischen den horizontalen Komponenten dieser Richtungen erfasst und durch einen Vorgang reduziert, bei dem die Gier-Bewegung und die Blattwinkelbewegung zeitlich aufeinander abgestimmt werden. Gemäß einer Weiterbildung des Verfahrens

- gibt die Hauptsteuereinheit den Sollwert für die Gier-Winkelgeschwindigkeit im Wesentlichen gleichzeitig an die Gier-Winkelsteuereinheit und an die Blattwinkelsteuereinheit ab, und/oder
- wird unter Verwendung des Sollwerts für die Gier-Winkelgeschwindigkeit, der Windbedingungen und der Rotorposition für jedes Rotorblatt ein Schema zur Blattwinkelverstellung berechnet, sodass die aerodynamische Wechselwirkung zwischen dem Wind und den Rotorblättern eine Belastung erzeugt, die der durch die Gier-Bewegung hervorgerufen, gyroskopischen Belastung entgegenwirkt, und/oder
- werden für die Gier-Rate und die Blattwinkelverstellrate sowie für den Gier-Winkel und für den Blattwinkel die Sollwerte und die gemessenen Werte, im Wesentlichen kontinuierlich, miteinander verglichen, und/oder
- wird ein Fehler erkannt (und z.B. ein "Fehler-Flag" gesetzt), wenn der Unterschied zwischen den Sollwerten und den gemessenen Werten für die Raten und/oder für die Winkel ein jeweils vorgegebenes Niveau übersteigt, und/oder
- wird die Gier-Winkelgeschwindigkeit auf einen Wert verringert, bei dem akzeptable gyroskopische Belastungen an den Rotorblättern ohne kompensierende Blattwinkelverstellung auftreten, und das Kompensieren der gyroskopischen Belastungen eingestellt, wenn ein Fehler erkannt worden ist (bzw. wenn das "Fehler-Flag" gesetzt worden ist).

Insbesondere wird durch die Erfindung

- die Möglichkeit einer erhöhten Energieaufnahme geschaffen, wenn die Windkraftanlage unterhalb der Nenngeschwindigkeit betrieben wird, und/oder
- eine Verringerung der Rotorblattbelastungen aufgrund von asymmetrischen Windbedingungen ermöglicht, wenn die Windkraftanlage oberhalb der Nenngeschwindigkeit betrieben wird, und/oder
- eine erhöhte Energieaufnahme ermöglicht, ohne dass eine strukturelle Neukonstruktion der Windkraftanlage erforderlich ist, und/oder
- eine erhöhte Energieaufnahme ermöglicht, wobei die Ausführung des erfindungsgemäßen Verfahrens auf einfache Weise mittels der Steuerungslogik einer bestehenden Windkraftanlage implementiert werden kann, und/oder
- eine erhöhte Energieaufnahme ermöglicht, wobei die erfindungsgemäße Steuereinrichtung nachträglich in eine bestehende Windkraftanlage installiert werden kann, und/oder
- eine erhöhte Energieaufnahme durch Verringerung des Gier-Winkelfehlers ermöglicht, der insbesondere als Winkel zwischen der Windrichtung und der Richtung der Rotorachse definiert ist, und/oder
- die Gierrate der Windkraftanlage erhöht, ohne größere gyroskopische Belastungen an den Rotorblättern zu erzeugen, und/oder
- ein rascher Gier-Vorgang mit einer Gier-Rate über 1°/s und vorzugsweise von über 4°/s ermöglicht, ohne größere gyroskopische Belastungen an den Rotorblättern und an dem Hauptantriebsstrang der Windkraftanlage hervorzurufen.

Die Erfindung wird nachfolgend anhand einer bevorzugten Ausführungsform unter Bezugnahme auf die Zeichnung beschrieben. In der Zeichnung zeigen:

Fig. 1     eine perspektivische Ansicht einer Windkraftanlage gemäß einer Ausführungsform der Erfindung,

Fig. 2     eine schematische Seitenansicht der Gier-Achse und der Rotorachse der Windkraftanlage sowie der Windrichtung,

Fig. 3     eine Draufsicht auf die Windkraftanlage,

Fig. 4     eine Vorderansicht der Windkraftanlage,

Fig. 5    ein Blockschaltbild einer Steuerungseinrichtung der Windkraftanlage,

Fig. 6    ein Koordinatensystem, in dem gemäß einer ersten Simulation der Gier-Winkel der Windkraftanlage über der Zeit aufgetragen ist,

Fig. 7    ein Koordinatensystem, in dem gemäß der ersten Simulation der Blattwinkel eines Rotorblatts der Windkraftanlage über der Zeit aufgetragen ist,

Fig. 8    ein Koordinatensystem, in dem gemäß der ersten Simulation das Schlagmoment an der Blattwurzel des Rotorblatts aufgetragen ist,

Fig. 9    ein Koordinatensystem, in dem gemäß einer anderen Simulation das Schlagmoment an der Blattwurzel des Rotorblatts aufgetragen ist und

Fig. 10    ein Koordinatensystem, in dem die während eines raschen Gier-Vorgangs auftretenden, gyroskopischen Belastungen und die Energieausbeute über den mit der Reduzierung der gyroskopischen Belastungen verbundenen Verlusten aufgetragen sind.

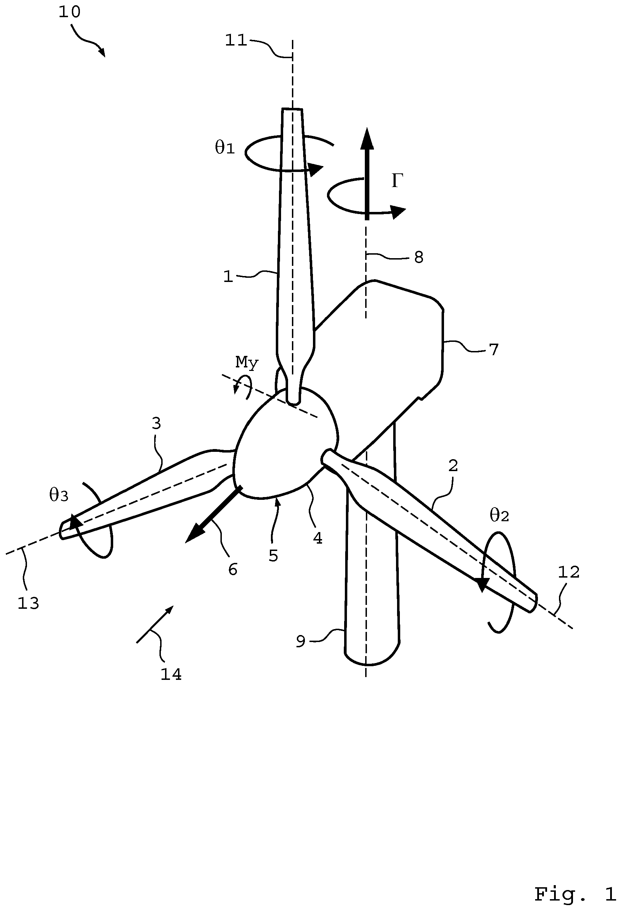

Fig. 1 zeigt eine Windkraftanlage 10 mit einem drei Rotorblätter 1, 2 und 3 und eine Rotornabe 4 umfassenden Rotor 5, der um eine Rotorachse 6 drehbar an einem Maschinenträger 7 gelagert ist. Die Rotorblätter 1, 2 und 3 sind jeweils um eine Blattachse 11, 12, bzw. 13 drehbar an der Nabe 4 gelagert und erstrecken sich in Richtung der Blattachsen von der Nabe 4 weg. Die Blattachsen 11, 12 und 13 verlaufen quer oder im Wesentlichen quer zur Rotorachse 6, wobei die Blattwinkel, um welche die Rotorblätter 1, 2 und 3 um ihre Blattachsen 11, 12 und 13 verdreht sind, mit $\theta_1$, $\theta_2$ und $\theta_3$ bezeichnet werden. Allgemein wird der Blattwinkel für das n-te Rotorblatt mit $\theta_n$ bezeichnet, wobei der Index n das jeweilige Rotorblatt kennzeichnet und für das erste Rotorblatt 1 den Wert n=1, für das zweite Rotorblatt 2 den Wert n=2 und für das dritte Rotorblatt 3 den Wert n=3 annimmt. Zwar ist die Anzahl N der Rotorblätter hier gleich drei (N=3), alternativ kann die Anzahl N der Rotorblätter aber auch zwei oder größer als drei sein.

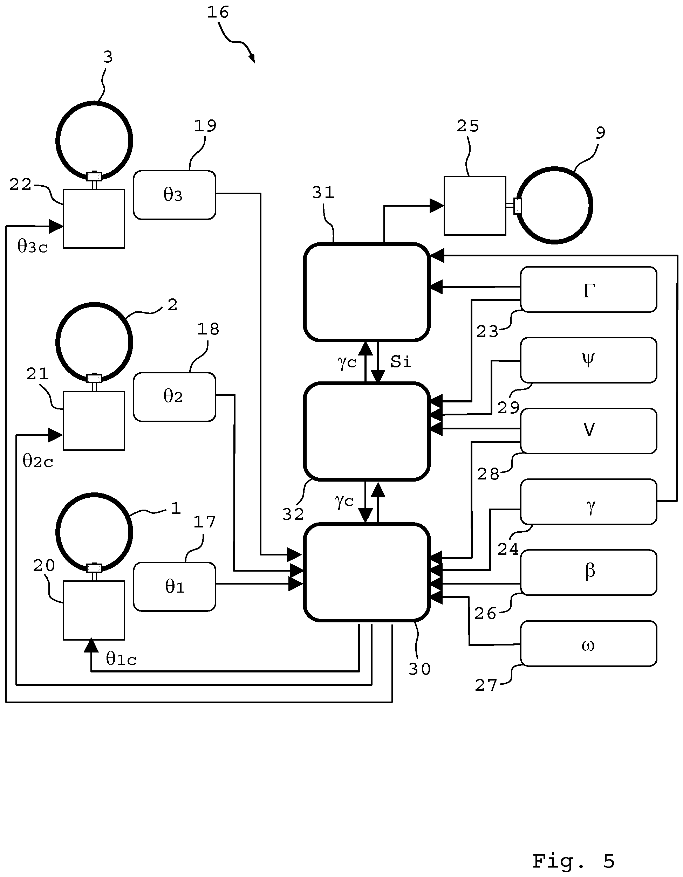

Durch Drehen der Rotorblätter 1, 2 und 3 um ihre Längsachsen werden die effektiven, aerodynamischen Anströmwinkel geändert, unter denen die Rotorblätter vom Wind 14 angeströmt werden, sodass die von dem Wind an den Rotor 5 abgegebene Leistung durch Drehen der Rotorblätter um ihre Blattachsen gesteuert oder geregelt werden kann. Zum Drehen der Rotorblätter 1, 2 und 3 um ihre Blattachsen sind Blattwinkelverstellantriebe 20, 21 und 22 (siehe Fig. 5) vorgesehen, wobei jedes Rotorblatt 1, 2 und 3 mittels des jeweiligen Blattwinkelverstellantriebs 20, 21 bzw. 22 individuell um seine Blattachse gedreht werden kann. Die Blattwinkelverstellantriebe 20, 21 und 22 sind somit Teil einer individuellen Blattwinkelsteuerung der Windkraftanlage.

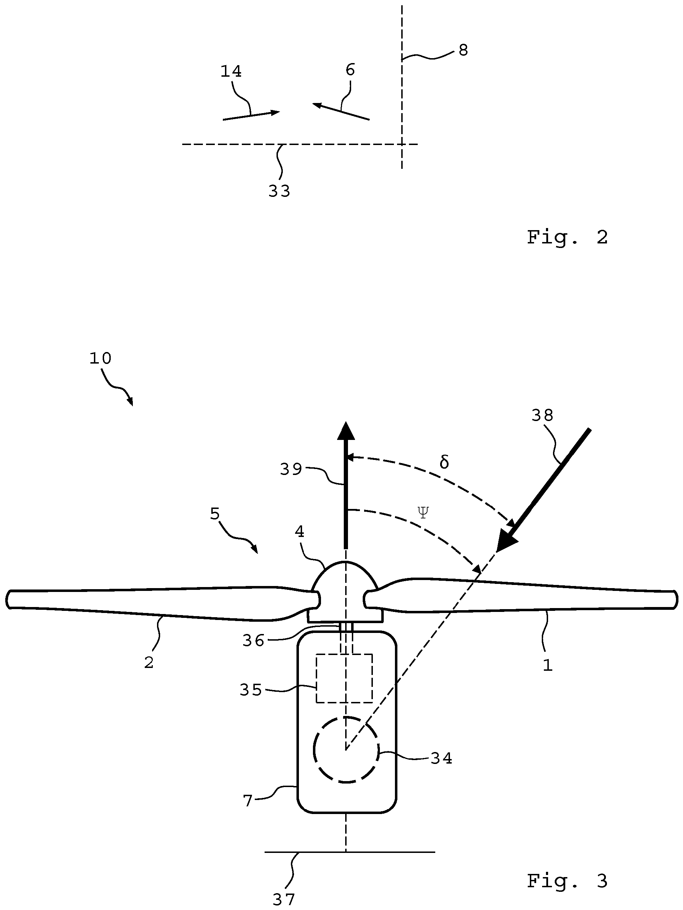

Der Rotor 4 ist zusammen mit dem Maschinenträger 7 mittels eines Gier-Lagers 34 (siehe Fig. 3) um eine vertikal oder im Wesentlichen vertikal ausgerichtete Gier-Achse 8 drehbar an einem oberen Ende eines Turms 9 gelagert, wobei der Gier-Winkel, um welchen der Rotor 5 zusammen mit dem Maschinenträger 7 um die Gier-Achse 8 gegenüber dem Turm 9 verdreht ist, mit $\Gamma$ bezeichnet wird. Die zeitliche Ableitung des Gier-Winkels $\Gamma$ wird als Gier-Winkelgeschwindigkeit (Gier-Rate) $\gamma$ bezeichnet und ergibt sich aus $\gamma = d\Gamma/dt$. Die Gier-Achse 8 verläuft in Richtung der Längsachse des Turms 9 und fällt insbesondere mit dieser zusammen. Das Drehen des Rotors 5 um die Gier-Achse 8, was als Gieren oder als Gier-Bewegung bezeichnet wird, erfolgt mittels eines Gier-Winkelverstellantriebs 25 (siehe Fig. 5).

Die Rotorachse 6 ist gegenüber einer horizontalen oder im Wesentlichen horizontalen Ebene 33 geringfügig nach oben geneigt, was aus Fig. 2 ersichtlich ist. Diese Neigung dient insbesondere zum Vermeiden von Kollisionen zwischen den Rotorblättern 1, 2 und 3 und dem Turm 9, da sich diese unter dem Einfluss des Winds elastisch verbiegen können. Die Neigung beträgt in Praxis vorzugsweise etwa 5° und ist in Fig. 2 übertrieben dargestellt. Die horizontale Ebene 33 verläuft insbesondere senkrecht zur Gier-Achse 8. Ferner kann die Windrichtung 14 gegenüber der horizontalen Ebene 33 geneigt sein. Da der Rotor 5 zur Windnachführung um die Gier-Achse 8 gedreht wird, interessieren hier lediglich die horizontalen Komponenten der Rotorachse und der Windrichtung, die sich durch die Projektion der Windrichtung 14 und der Rotorachse 6 auf die horizontale Ebene 33 ergeben.

Fig. 3 zeigt eine Draufsicht auf die Windkraftanlage 10, wobei der Winkel zwischen der horizontalen Komponente der Windrichtung 38 und der horizontalen Komponente der Rotorachse 39 als Gier-Winkelfehler $\delta$ bezeichnet wird. Die horizontale Ebene 33 liegt hier in der Zeichnungsebene. Unter stetigen Windbedingungen kann der Gier-Winkelfehler $\delta$ durch eine geeignete Gier-Bewegung des Rotors 5 auf null reduziert werden.

Ferner zeigt Fig. 3 in schematischer Darstellung das Gier-Lager 34, einen elektrischen Generator 35 und eine Rotorwelle 36, mittels welcher der Rotor 5 mit dem elektrischen Generator 35 mechanisch gekoppelt ist. Der Generator 35 ist an dem Maschinenträger 7 befestigt, an welchem die Rotorwelle 36 um die Rotorachse 6 drehbar gelagert ist. Der Generator 35 wird hier direkt von der Rotorwelle 36 angetrieben und erzeugt elektrische Energie, die an ein elektrisches Netz 37 abgegeben wird. Alternativ kann zwischen der Rotorwelle 36 und dem Generator 35 aber auch ein Getriebe geschaltet sein.

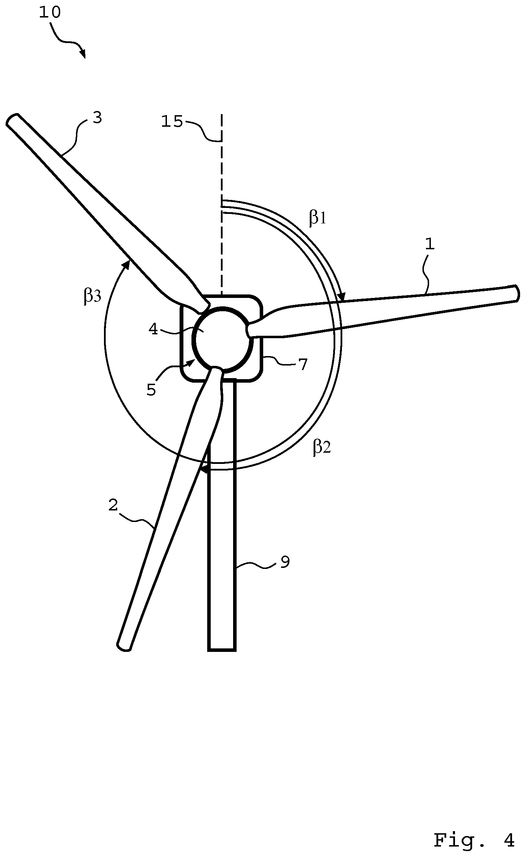

Fig. 4 zeigt eine Vorderansicht der Windkraftanlage 10, wobei die Rotationswinkel $\beta_1$, $\beta_2$ und $\beta_3$, welche die Rotorblätter 1, 2 und 3 mit einer vertikal oder im Wesentlichen vertikal ausgerichteten Geraden 15 einschließen, dargestellt sind. Allgemein wird der Rotationswinkel für das n-te Rotorblatt mit $\beta_n$ bezeichnet, wobei der Index n das jeweilige Rotorblatt kennzeichnet. Die Gerade 15 verläuft insbesondere in Richtung der Gier-Achse 8. Da die Rotorblätter 1, 2 und 3 rings der Rotorachse 6 feste Winkel miteinander einschließen, ist es ausreichend, einen der Rotationswinkel zu messen. Die anderen Rotationswinkel lassen sich dann durch Berechnung ermitteln. Wird der Rotationswinkel $\beta_1$ für das erste Rotorblatt 1 gemessen, so ergibt sich der Rotationswinkel $\beta_2$ für das zweite Rotorblatt aus $\beta_2 = \beta_1 + 2\pi/3$ und der Rotationswinkel $\beta_3$ für das dritte Rotorblatt aus $\beta_3 = \beta_1 + 4\pi/3$, wobei die Winkel hier im Bogenmaß angegeben sind. Die zeitliche Ableitung des Rotationswinkels $\beta_1$ wird als Rotationswinkelgeschwindigkeit $\omega$ bezeichnet und ergibt sich aus $\omega = d\beta_1/dt$. Die Rotationswinkelgeschwindigkeit ist für alle Rotorblätter gleich und beschreibt die Winkelgeschwindigkeit, mit welcher der Rotor 5 um die Rotorachse 6 dreht.

Aus Fig. 5 ist ein schematisches Blockschaltbild einer Steuerungseinrichtung 16 der Windkraftanlage 10 ersichtlich. Die Steuerungseinrichtung 16 umfasst einen Blattwinkelsensor 17, mittels welchen der Blattwinkel $\theta_1$ des Rotorblatts 1 erfassbar ist, einen Blattwinkelsensor 18, mittels welchen der Blattwinkel $\theta_2$ des Rotorblatts 2 erfassbar ist, einen Blattwinkelsensor 19, mittels welchen der Blattwinkel $\theta_3$ des Rotorblatts 3 erfassbar ist, einen Blattwinkelverstellantrieb 20, mittels welchem das Rotorblatt 1 um seine Blattachse 11 drehbar ist, einen Blattwinkelverstellantrieb 21, mittels welchem das Rotorblatt 2 um seine Blattachse 12 drehbar ist, einen Blattwinkelverstellantrieb 22, mittels welchem das Rotorblatt 3 um seine Blattachse 13 drehbar ist, einen Gier-Winkelsensor 23, mittels welchem der Gier-Winkel $\Gamma$ erfassbar ist, einen Gier-Ratensensor 24, mittels welchem die Gier-Winkelgeschwindigkeit $\gamma$ erfassbar ist, den Gier-Winkelverstellantrieb 25, mittels welchem der Rotor 5 um die Gier-Achse 8 drehbar ist, einen Rotationswinkelsensor 26, mittels welchem der Rotationswinkel $\beta_1$ des ersten Rotorblatts 1 erfassbar ist, einen Rotationswinkelgeschwindigkeitssensor 27, mittels welchem die Winkelgeschwindigkeit $\omega$ erfassbar ist, mit welcher der Rotor 5 um die Rotorachse 6 dreht, einen Windgeschwindigkeitssensor 28, mittels welchem die Windgeschwindigkeit V erfassbar ist, einen Windrichtungssensor 29, mittels welchem ein die horizontale Komponente der Windrichtung beschreibender Winkel $\Psi$ erfassbar ist, eine Blattwinkelsteuereinheit 30, mittels welcher die Blattwinkelverstellantriebe 20, 21 und 22 steuerbar sind, eine Gier-Winkelsteuereinheit 31, mittels welcher der Gier-Winkelverstellantrieb 25 steuerbar ist und eine Hauptsteuereinheit 32, mittels welcher die Blattwinkelsteuereinheit 30 und die Gier-Winkelsteuereinheit 31 ansteuerbar sind.

Die übergeordnete Steuerung der Windkraftanlage 10 erfolgt durch die Hauptsteuereinheit 32. Diese Einheit kommuniziert bi-direktional mit der Blattwinkelsteuereinheit 30 und mit der Gier-Winkelsteuereinheit 31. Die Steuereinheiten können durch dieselbe Schaltung (Hardware) oder durch separate Schaltungen aufgebaut sein. Ferner können die Steuereinheiten in einem gemeinsamen Gehäuse oder separaten Gehäusen angeordnet sein.

Durch einen Index "c" werden von den Steuereinheiten bestimmte und/oder abgegebene Sollwerte von Messwerten unterschieden, die mittels der Sensoren erfasst werden. Beispielsweise bezeichnet $\gamma c$ einen Sollwert für die Gier-Rate, wohingegen $\gamma$ die gemessene Gier-Rate bezeichnet. Als Gier-Rate wird die Gier-Winkelgeschwindigkeit des Rotors 5 bei einer Drehung um die Gier-Achse 8 bezeichnet.

Die Hauptsteuereinheit 32 sendet als Anweisung einen Gier-Raten-Sollwert $\gamma c$ an die Gier-Winkelsteuereinheit 31 und empfängt von dieser Statusinformationen Si über den Status der Ausführung dieser Anweisung. Die Gier-Winkelsteuereinheit 31 wiederum steuert den Gier-Winkelverstellantrieb 25 und überprüft, ob die gemessene Gier-Rate $\gamma$ dem Gier-Raten-Sollwert $\gamma c$ folgt.

Die Hauptsteuereinheit 32 kommuniziert mit der Blattwinkelsteuereinheit 30, um die von dem Wind an den Rotor 5 abgegebene, aerodynamische Leistung zu regeln und um den Status der Ausführung von die Blattwinkel $\theta_n$ betreffenden Anweisungen zu überprüfen. Ferner kann die Hauptsteuereinheit 32 mit der Blattwinkelsteuereinheit 30 zu anderen Zwecken kommunizieren, die aus dem Stand der Technik bekannt sind. Ein zur Regelung der Leistung oder unter anderem zur Regelung der Leistung dienender Sollwert für den Blattwinkel $\theta_n$ des n-ten Rotorblatts wird dabei mit $\theta_{ncp}$ bezeichnet.

Zum Steuern der Windkraftanlage 10 liefern die Sensoren Informationen an die Steuereinheiten. Die Hauptsteuereinheit 32 empfängt den Gier-Winkel $\Gamma$ von dem Gier-Winkelsensor 23 und den die Windrichtung beschreibenden Winkel $\Psi$ von dem Windrichtungssensor 29 und berechnet daraus den Gier-Winkelfehler $\delta$, mit $\delta = \Psi - \Gamma$. Ferner empfängt die Hauptsteuereinheit 32 von dem Windgeschwindigkeitssensor 28 die Windgeschwindigkeit V, aus welcher die aerodynamische Leistung ableitbar ist.

Die Blattwinkelsteuereinheit 30 empfängt den aktuellen Blattwinkel $\theta_n$ für jedes Rotorblatt 1, 2 und 3 von den Blattwinkelsensoren 17, 18 und 19, sodass die Blattwinkelsteuereinheit 30 an die Blattwinkelverstellantriebe 20, 21 und 22 abgegebene Anweisungen über einzustellende Sollwerte für die Blattwinkel $\theta_{nc}$ auf ihre Ausführung innerhalb vorgegebener Toleranzen hin überwachen kann. Ferner empfängt die Blattwinkelsteuereinheit 30 von den Sensoren 28, 24, 26 und 27 die Windgeschwindigkeit V, die Gier-Rate $\gamma$, den Rotationswinkel $\beta_1$ des ersten Rotorblatts 1 und die Winkelgeschwindigkeit $\omega$ des Rotors 5, um den Soll-Blattwinkel $\theta_{nc}$ für jedes Rotorblatt zu berechnen.

Die Steuerungseinrichtung 16, insbesondere die Hauptsteuereinheit 32, überwacht den Gier-Winkelfehler $\delta$

und leitet zur Reduzierung dieses Fehlers einen raschen Gier-Vorgang ein, falls der Gier-Winkelfehler δ als zu groß erachtet wird. Die Bedingung für "zu groß" kann z.B. durch eine Funktion des aktuellen Gier-Winkelfehlers δ, eines über eine vorbestimmte Zeitdauer gemittelten Gier-Winkelfehlers, einer zeitlichen Änderung des Gier-Winkelfehlers (z.B. Gier-Winkelfehlerrate) und/oder der aktuellen Gier-Rate des Rotors 5 definiert sein.

Der rasche Gier-Vorgang wird durch das Berechnen eines Sollwerts für die Gier-Rate $\gamma_c$ eingeleitet. Insbesondere ist für eine nahezu optimale Gier-Winkelfehlerminimierung der Sollwert der Gier-Rate im Wesentlichen proportional zu der Gier-Winkelfehlerrate dδ/dt, welche der zeitlichen Ableitung des Gier-Winkelfehlers δ entspricht. Der Sollwert der Gier-Rate ist durch eine maximal zulässige Gier-Rate ymax begrenzt, die mit den Leistungseigenschaften der Gier- und der Blattwinkelverstellantriebe vereinbar ist.

Der Sollwert der Gier-Rate $\gamma_c$ wird an die Gier-Steuereinheit 31 und gleichzeitig oder im Wesentlichen gleichzeitig an die Blattwinkelsteuereinheit 30 übermittelt. Die Blattwinkelsteuereinheit 30 kann jedes Rotorblatt individuell betätigen und ist für die Drehung jedes Rotorblatts um seine Blattachse verantwortlich. Beim Einsetzen des raschen Gier-Vorgangs wird der Sollwert der Gier-Rate $\gamma_c$ von 0 bis auf den berechneten Wert sanft erhöht, sodass stoßartige Belastungen des Gier-Winkelverstellantriebs 25 vermieden werden. Während des raschen Gier-Vorgangs wird der Sollwert der Gier-Rate $\gamma_c$, vorzugsweise kontinuierlich, modifiziert, damit der Rotor 5 Änderungen der Windrichtung folgt.

Das gleichzeitige Übermitteln von Informationen über den Beginn der Gier-Aktivität und des Sollwerts der Gier-Rate $\gamma_c$ an die Gier-Steuereinheit 31 und die Blattwinkelsteuereinheit 30 ermöglicht dieser, das Ausführen eines kompensierenden Blattwinkelverstellvorgangs mit dem Auftreten gyroskopischer Belastungen zeitlich zu synchronisieren, sodass diese ganz oder teilweise kompensiert werden. Der Soll-Blattwinkel $\theta_{nc}$ für das n-te Rotorblatt wird dabei durch eine Funktion beschrieben, die im Wesentlichen die folgende Form aufweist:

$$(1) \quad \theta_{nc} = \theta_{ncp} + \gamma_c * G * \cos(\beta_n + \phi),$$

$\theta_{nc}$    Soll-Blattwinkel für Rotorblatt n
$\theta_{ncp}$    Soll-Blattwinkel für Rotorblatt n ohne Kompensation gyroskopischer Belastungen
$\gamma_c$    Sollwert der Gier-Rate
G    Verstärkung
$\beta_n$    gemessener, aktueller Rotationswinkel des Rotorblatts n
$\phi$    Phasenversatz.

Der Soll-Blattwinkel $\theta_{nc}$ wird aus einer Summe gebildet, wobei ein erster Summand "$\theta_{ncp}$" der Summe einem Soll-Blattwinkel ohne Kompensation gyroskopischer Belastungen entspricht, wie er bei einer herkömmlichen Windkraftanlage im "normalen" Betrieb gebildet wird, und wobei der zweite Summand der Summe "$y_c * G * \cos(\beta_n + \phi)$" die Kompensation der gyroskopischen Belastungen bewirkt. Der zweite Summand erzeugt somit einen Soll-Blattwinkel $\theta_{nc}$, der sich zyklisch mit dem Rotationswinkel $\beta_n$ des jeweiligen Rotorblatts ändert.

Wenn die Verstärkung G konstant gehalten wird, ist der zweite Summand proportional zu dem Sollwert für die Gier-Rate $\gamma_c$. Ferner sind die gyroskopischen Belastungen proportional zu der gemessenen Gier-Rate $\gamma_c$. Die Verstärkung G und der Phasenversatz $\phi$ werden nun derart ausgewählt, dass die an den Rotorblättern angreifenden, gyroskopischen Belastungen auf ein gewünschtes Maß reduziert werden.

Das gewünschte Maß, auf welches die gyroskopischen Belastungen reduziert werden, führt nicht notwendigerweise zur größtmöglichen Reduzierung der gyroskopischen Belastungen. Das gewünschte Maß kann lediglich zu einer teilweisen Reduzierung der gyroskopischen Belastungen führen, insbesondere wenn die verbleibenden gyroskopischen Belastungen im Einklang mit zulässigen Belastungen der Rotorblätter stehen. Die verbleibenden gyroskopischen Belastungen verkürzen somit nicht die erwartete Lebensdauer von Komponenten der Windkraftanlage. Da mit der Reduzierung der gyroskopischen Belastung Verluste verbunden sind, die insbesondere mit zunehmender Reduzierung steigen, ist die Energieausbeute der Windkraftanlage bei einer teilweisen Reduzierung der gyroskopischen Belastungen in der Regel größer, als wenn die gyroskopischen Belastungen minimiert oder vollständig eliminiert würden.

Bevorzugt werden die gyroskopischen Belastungen daher lediglich teilweise reduziert, sodass verbleibende gyroskopische Belastungen im Bereich zulässiger Belastungen der Rotorblätter liegen. Das Maß auf welches die gyroskopischen Belastungen dabei reduziert werden, wird auch als optimales Maß bezeichnet, da dieses Maß in Bezug auf den Wunsch nach einer Verringerung der gyroskopischen Belastungen einerseits und in Bezug auf den Wunsch nach einer maximalen Energieausbeute andererseits insbesondere ein Optimum bildet. Die zulässigen Belastungen sind somit bevorzugt maximal zulässige Belastungen.

Das optimale Maß bestimmende Einflussfaktoren sind z.B. Eigenschaften der Rotorblätter und anderer Komponenten der Windkraftanlage sowie deren Kosten, für die Windkraftanlage erwartete Windbedingungen, einschließlich von Turbulenzen, und erwartete Gier-Aktivitäten. Sind die das optimale Maß bestimmenden Einflussfaktoren bekannt, so kann dieses unter Verwendung von Standard-Optimierungs-Routinen ermittelt werden, die aus dem Stand der Technik bekannt sind.

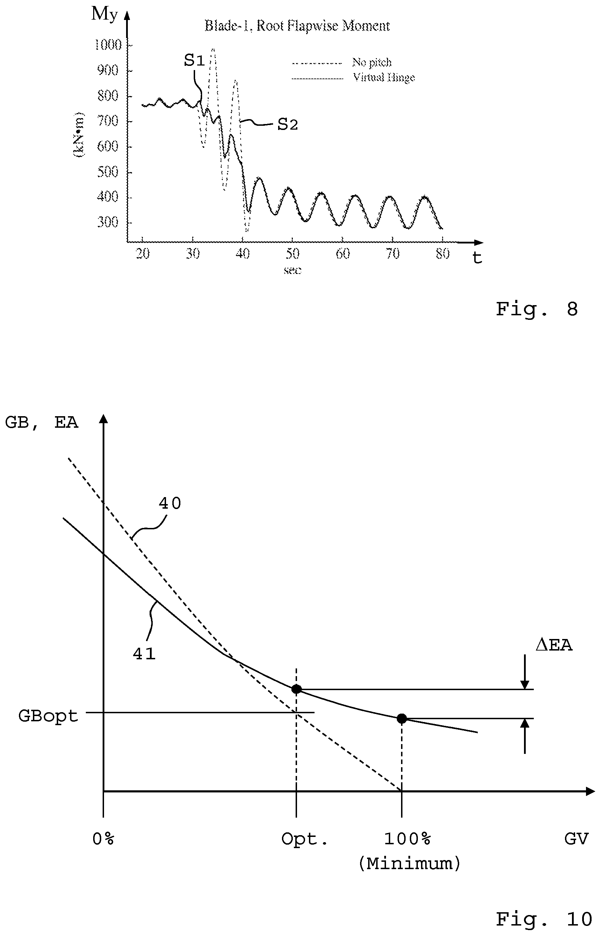

Aus Fig. 10 ist ein Koordinatensystem ersichtlich, in dem die gyroskopischen Belastungen GB während eines raschen Gier-Vorgangs mit einer Gier-Rate von z.B. 5°/s schematisch über den mit der Reduzierung der gyroskopischen Belastung verbundenen Verlusten GV aufgetragen sind, wobei der zugehörige Graph als Belastungskurve 40 bezeichnet wird (gestrichelt dargestellt). Ferner ist in dem Koordinatensystem die Energieausbeute EA während des raschen Gier-Vorgangs schematisch über den Verlusten GV aufgetragen, wobei der zugehörige Graph als Energiekurve 41 bezeichnet wird (durchgezogene Linie). Der Wert GBopt auf der Ordinate kennzeichnet eine gyroskopische Belastung, die einer zulässigen Belastung der Rotorblätter entspricht, wobei der zugehörige Wert auf der Abszisse mit Opt. bezeichnet ist. Insbesondere führen oberhalb von GBopt liegende Werte von GB zu unzulässig hohen Belastungen, sodass GBopt in diesem Sinne eine maximal zulässige Belastung repräsentiert. Am Schnittpunkt der Belastungskurve 40 mit der Abszisse ist die gyroskopische Belastung minimal (Minimum), wobei der zugehörige Wert auf der Abszisse mit 100% bezeichnet ist und insbesondere einen maximalen Wert für GV bildet. Die Differenz zwischen den den Verlustwerten Opt. und 100% zugeordneten Ordinatenwerten der Energiekurve ist mit $\Delta$EA bezeichnet. Werden die gyroskopischen Belastungen lediglich teilweise reduziert, und zwar bevorzugt auf GBopt, so ergibt sich gegenüber einer Minimierung der gyroskopischen Belastungen eine um $\Delta$EA erhöhte Energieausbeute. Der Belastungswert GBopt entspricht somit bevorzugt dem optimalen Maß.

Eine teilweise Reduzierung der gyroskopischen Belastungen ermöglicht demnach eine erhöhte Energieaufnahme, insbesondere unter turbulenten Windbedingungen, die z.B. eine konstante Gier-Bewegung erfordern. Die Verstärkung G und der Phasenversatz $\phi$ werden somit bevorzugt derart ausgewählt, dass die an den Rotorblättern angreifenden, gyroskopischen Belastungen auf das optimale Maß reduziert werden. Dennoch soll nicht ausgeschlossen werden, dass auch eine Reduzierung der gyroskopischen Belastungen auf ein minimales Maß möglich ist.

Da zur Kompensation der gyroskopischen Belastungen aerodynamische Belastungen genutzt werden, variieren die gewünschten Werte für G und $\phi$ sowohl mit den Windbedingungen als auch mit dem Betriebszustand der Windkraftanlage (z.B. Rotordrehgeschwindigkeit, Gier-Winkelfehler etc). Zusätzlich sind die Werte für G und $\phi$ sowohl von den aerodynamischen Eigenschaften der Rotorblätter, wie z.B. dem Auftriebsbeiwert und dem Anströmwinkel bei einsetzendem Strömungsabriss, als auch von den strukturellen Eigenschaften der Windkraftanlage, wie z.B. der Massenträgheit der Rotorblätter, abhängig. Falls sich diese Eigenschaften von Rotorblatt zu Rotorblatt ändern, ändern sich auch G und $\phi$ von Rotorblatt zu Rotorblatt. Insbesondere sind die Werte für G und $\phi$ abhängig von der Rotordrehgeschwindigkeit oder Rotorwinkelgeschwindigkeit $\omega$ und/oder von der Windgeschwindigkeit V und/oder von dem Rotationswinkel $\beta_n$ des jeweiligen Rotorblatts n.

Bevorzugt sind geeignete Werte für G und $\phi$ für unterschiedliche Wind- und Windkraftanlagebedingungen in einem Speicher hinterlegt, insbesondere in tabellarischer Form. Dazu werden geeignete Werte für G und $\phi$ bei bekannten Wind- und Windkraftanlagebedingungen bestimmt und als Funktion dieser Bedingungen in Form einer Tabelle in einem Speichermodul gespeichert. Somit können die Werte für G und $\phi$ bei aktuellen Wind- und Windkraftanlagenbedingungen durch Auslesen geeigneter Werte aus der Tabelle ermittelt werden. Dieses Ermitteln kann entweder dadurch erfolgen, dass die für die aktuellen Wind- und Windkraftanlagenbedingungen nächstpassenden Werte für G und $\phi$ ausgelesen und verwendet werden, oder dass die Werte für G und $\phi$ in Abhängigkeit von den aktuellen Bedingungen unter Anwendung eines linearen Interpolations-Verfahrens oder eines anderen, geeigneten Interpolationsverfahrens, gewonnen werden. Da durch die Interpolation Zwischenwerte gebildet werden können, ist die Anwendung eines Interpolationsverfahrens bevorzugt, wobei geeignete Interpolationsverfahren aus dem Stand der Technik bekannt sind.

Die oben genannten Wind- und Windkraftanlagenbedingungen umfassen insbesondere die Rotorwinkelgeschwindigkeit $\omega$, die Windgeschwindigkeit V, den Gier-Winkelfehler $\delta$ sowie die zulässige Blattwurzelbelastung des jeweiligen Rotorblatts. Die zulässige Blattwurzelbelastung umfasst einen statischen Anteil und/oder einen dynamischen Anteil, wobei insbesondere dynamische Blattwurzelbelastungen zur Materialermüdung von Komponenten der Windkraftanlage beitragen.

Das Bestimmen der gespeicherten Werte für G und $\phi$ erfolgt bevorzugt durch eine nummerische Simulation der Windkraftanlage unter Verwendung von kontrollierten Windbedingungen. Bevorzugt werden alle relevanten Bedingungen, deren Eintreten während des Betriebs der Windkraftanlage erwartet wird, zum Bilden der Tabelle verwendet. Die Wind- und Windkraftanlagenbedingungen werden dabei so gewählt, sodass deren reale Variationsbreite möglichst vollständig abgedeckt wird.

Die Steuerungseinrichtung 16, insbesondere die Hauptsteuereinheit 32, überwacht, z.B. auf Basis der Statusinformationen Si, während des raschen Gier-Vorgangs die Abweichung zwischen dem Sollwert der Gier-Rate $\gamma_c$ und der aktuellen Gier-Rate $\gamma$. Diese Abweichung wird aufgrund von Stellbewegungsfehlern und in einem größeren Umfang aufgrund von den Stellbewegungen überlagerten Störbewegungen, die durch Turbulenzen und durch asymmetrische Windbewegungen am Rotor 5 verursacht werden, in der Regel nicht null sein.

Die Abweichung zwischen dem Sollwert der Gier-Rate $\gamma_c$ und der aktuelle Gier-Rate $\gamma$ ist aber vernachlässigbar, sofern diese Abweichung unterhalb eines vorgegebenen Schwellenwerts liegt. Jenseits des Schwellenwerts liegende Abweichungen werden dahingehend interpretiert, dass ein Fehler im Gier-System vorliegt, sodass der Sollwert für die Gier-Rate auf einen Wert reduziert wird, bei dem keine Kompensation der gyroskopischen Belastungen mehr erforderlich ist. Gleichzeitig wird die Kompensation gyroskopischer Belastungen abgeschaltet. Beispielsweise wird der Sollwert für die Gier-Rate auf einen Wert von weniger als 0,7°/s reduziert, was für das Gieren einer herkömmlichen Windkraftanlage ohne Kompensation gyroskopischer Belastungen üblich ist.

Ist die Abweichung zwischen dem Sollwert der Gier-Rate $\gamma_c$ und der aktuelle Gier-Rate $\gamma$ aber gering, können zur Kompensation gyroskopischer Belastungen sowohl der Sollwert der Gier-Rate $\gamma_c$ als auch die aktuelle Gier-Rate $\gamma$ verwendet werden, um einen raschen Gier-Vorgang erfolgreich durchzuführen. In diesem Fall kann in Gleichung (1) der Sollwert der Gier-Rate $\gamma_c$ durch die gemessene, aktuelle Gier-Rate $\gamma$ ersetzt werden, sodass der zweite Summand proportional zur Gier-Rate $\gamma$ ist.

Die Steuerungseinrichtung 16, insbesondere die Hauptsteuereinheit 32, überwacht ferner, z.B. auf Basis von von der Blattwinkelsteuereinheit 30 gelieferten Statusinformationen, während des raschen Gier-Vorgangs für jedes Rotorblatt die Abweichung zwischen einer aktuellen Blattwinkelrate ($d\theta_n/dt$), die der zeitlichen Ableitung des jeweiligen Blattwinkels $\theta_n$ entspricht, und einem Sollwert für die Blattwinkelrate. Falls diese Abweichung einen vorgegebenen Schwellenwert übersteigt, wird der rasche Gier-Vorgang abgebrochen und der Sollwert für die Gier-Rate auf einen Wert reduziert, bei dem keine Kompensation der gyroskopischen Belastungen mehr erforderlich ist. Beispielsweise wird der Gier-Vorgang mit einer herkömmlichen Gier-Rate von weniger 0,7°/s fortgesetzt.

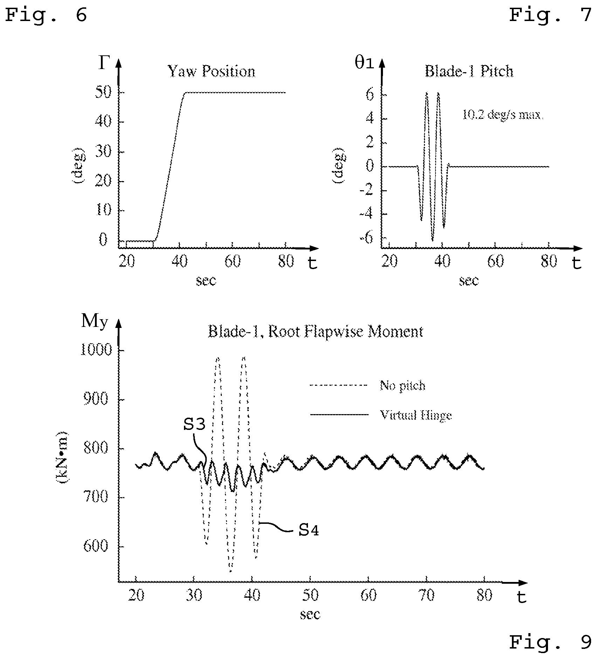

Unter Bezugnahme auf die Fig. 6 bis 9 werden vier Simulationen S1, S2, S3 und S4 eines raschen Gier-Vorgangs beschrieben, die für eine erfindungsgemäße Windkraftanlage durchgeführt worden sind. Als Windkraftanlage kann z.B. eine Anlage vom Typ NREL 1,5 MW baseline turbine eingesetzt werden, wie sie in dem Dokument NREL/SR-500-32495, "WindPACT Turbine Rotor Design Study" von D.J. Malcolm und A.C. Hansen (2002), beschrieben wird, wobei diese Anlage in erfindungsgemäßer Weise zu modifizieren ist.

Aus Fig. 6 ist ein Koordinatensystem ersichtlich, in dem der Gier-Winkel $\Gamma$ (Yaw Position) über der Zeit t aufgetragen ist.

Der Gier-Winkel ist in Grad (deg) und die Zeit in Sekunden (sec) angegeben. Für die Simulationen S1, S2, S3 und S4 eines raschen Gier-Vorgangs wird der Gier-Winkel $\Gamma$ gemäß Fig. 6 geändert.

Aus Fig. 7 ist ein Koordinatensystem ersichtlich, in dem der Blattwinkel $\beta_1$ für das erste Rotorblatt 1 (Blade-1 Pitch) über der Zeit t während der ersten Simulation S1 aufgetragen ist. Der Blattwinkel ist in Grad (deg) und die Zeit in Sekunden (sec) angegeben.

Gemäß der Fig. 6 und 7 wird der Gier-Winkel $\Gamma$ mit einer Rate von 5°/s für eine Zeitdauer von 10s geändert, was zu einer Gesamtänderung des Gier-Winkels von 50° führt. Die Windgeschwindigkeit V wird konstant bei 7m/s gehalten, während sich die Windrichtung in gleicher Weise wie der Gier-Winkel $\Gamma$ der Windkraftanlage ändert, sodass der Gier- Winkelfehler $\delta$ während der Simulation null bleibt (d.h. $\delta=0$). Diese Beziehung zwischen Windrichtung und Gier-Winkel repräsentiert den Grenzfall einer perfekten Windnachführung. Die Regelung des Blattwinkels arbeitet mit einer Verstärkung G von 1,25s und mit einer Phase $\phi$ von -20°, sodass sich ein Soll-Blattwinkel $\theta_{nc}$ mit einer maximalen Soll-Blattwinkelrate $d\theta_{nc}/dt$ von weniger als 10°/s ergibt, was mit Leistungs-Nenndaten von aktuell auf dem Markt verfügbaren Blattwinkelverstellantrieben vereinbar ist. Die maximale Blattwinkelrate $d\theta_1/dt$ gemäß Fig. 7 beträgt 10,2°/s (10.2 deg/s max.). Die Rotorwinkelgeschwindigkeit $\omega$ beträgt z.B. etwa 18/s.

Aus Fig. 8 ist ein Koordinatensystem ersichtlich, in dem das an der Blattwurzel auftretende Schlagmoment My für das erste Rotorblatt 1 (Blade-1, Root Flapwise Moment) über der Zeit t während der ersten Simulation S1 mit einer durchgezogenen Linie und während der zweiten Simulation S2 mit einer gestrichelten Linie aufgetragen ist. Das Schlagmoment ist in kNm und die Zeit in Sekunden (sec) angegeben. Gemäß der ersten Simulation S1 erfolgt eine Blattwinkelverstellung zur Kompensation gyroskopischer Belastungen, wohingegen gemäß der zweiten Simulation S2 die Kompensation der gyroskopischen Belastungen nicht erfolgt (No pitch). Die Rotorachse 6 ist in Windrichtung 14 ausgerichtet, sodass kein Gier-Winkelfehler $\delta$ auftritt.

Die großen Schwingungen, welche mittels der gestrichelten Linie dargestellt sind (Simulation 2, ohne Kompensation gyroskopischer Belastungen), können die Windkraftanlage beschädigen und sind somit nicht zulässig. Gemäß der durchgezogenen Linie (Simulation S1, mit aktivierter Kompensation der gyroskopischen Belastungen) unterliegt das Schlagmoment lediglich Schwankungen, wie sie auch während des Betriebs ohne Gier-Bewegung auftreten, sodass der rasche Gier-Vorgang ohne strukturelle Änderungen am Rotorblatt oder am Antriebsstrang der Windkraftanlage möglich ist. Gemäß einer vereinfachten Modellbildung wirkt die Kompensation gyroskopischer Belastungen bezüglich des Schlagmoments wie ein virtuelles Gelenk (Virtual Hinge), was allerdings nur beispielhaft zu verstehen ist.

Aus Fig. 9 ist ein Koordinatensystem ersichtlich, in dem das an der Blattwurzel auftretende Schlagmoment My für das erste Rotorblatt 1 über der Zeit t während der dritten Simulation S3 mit einer durchgezogenen Linie und während der vierten Simulation S4 mit einer gestrichelten Linie aufgetragen ist. Gemäß der dritten Simulation S3 erfolgt eine Blattwinkelverstellung zur Kompensation gyroskopischer Belastungen, wohingegen gemäß der vierten Simulation S4 die Kompensation der gyroskopischen Belastungen ausgeschaltet ist. Gemäß Fig. 8 ist die Windrichtung 14 konstant, sodass der Gier-Winkelfehler $\delta$ auf einen maximalen Wert ansteigt.

Der Rotor 5 giert gemäß Fig. 6, wobei die Windrichtung konstant gehalten wird. In diesem Fall ist der Gier-Winkelfehler δ gleich dem Gier-Winkel Γ, was den Grenzfall einer unvollkommenen Windnachführung repräsentiert. Die großen Schwingungen, welche durch die gestrichelte Linie dargestellt sind (Simulation 4, ohne Kompensation gyroskopischer Belastungen), sind unzulässig.

Der Schwingungsanteil des Schlagmoments My, der bei etwa 60s im Falle der aktivierten Kompensation der gyroskopischen Belastungen sichtbar ist (Simulation S3, durchgezogene Linie), wird durch den zunehmend großen Gier-Winkelfehler hervorgerufen, unter welchem die Windkraftanlage arbeitet. Der Gier-Winkelfehler ist nach Abschluss des raschen Gier-Vorgangs bei 60 Sekunden maximal. Zum Verringern dieses Schwingungsanteils kann eine individuelle Blattwinkelsteuerungs-Logik zum Reduzieren von Blattlasten, die durch Gier-Winkelfehler hervorgerufen werden, eingesetzt werden. Eine solche Blattwinkelsteuerungs-Logik ist für einen nicht-gierenden Rotor aus dem Stand der Technik bekannt. Bevorzugt kann die erfindungsgemäße Blattwinkelverstellung zur Kompensation gyroskopischer Belastungen auch zusammen mit anderen, bekannten Blattwinkelsteuerungs-Strategien zur individuellen oder gemeinsamen Blattwinkelsteuerung eingesetzt werden.

Bezugszeichenliste

| | |
|---|---|
| 1 | Rotorblatt |
| 2 | Rotorblatt |
| 3 | Rotorblatt |
| 4 | Rotornabe |
| 5 | Rotor |
| 6 | Rotorachse |
| 7 | Gondel / Maschinenträger |
| 8 | Gier-Achse |
| 9 | Turm |
| 10 | Windkraftanlage, |
| 11 | Blattachse |
| 12 | Blattachse |
| 13 | Blattachse |
| 14 | Windrichtung |
| 15 | Gerade |
| 16 | Steuerungseinrichtung |
| 17 | Blattwinkelsensor |
| 18 | Blattwinkelsensor |
| 19 | Blattwinkelsensor |
| 20 | Blattwinkelverstelleinrichtung |
| 21 | Blattwinkelverstelleinrichtung |
| 22 | Blattwinkelverstelleinrichtung |
| 23 | Gier-Winkelsensor |
| 24 | Gier-Winkelgeschwindigkeitssensor |
| 25 | Gier-Winkelverstelleinrichtung |
| 26 | Rotationswinkelsensor |
| 27 | Rotationswinkelgeschwindigkeitssensor |
| 28 | Windgeschwindigkeitssensor |
| 29 | Windrichtungssensor |
| 30 | Blattwinkelsteuereinheit |
| 31 | Gier-Winkelsteuereinheit |
| 32 | Hauptsteuereinheit |
| 33 | horizontale Ebene |
| 34 | Gier-Lager |
| 35 | elektrischer Generator |
| 36 | Rotorwelle |
| 37 | elektrisches Netz |
| 38 | horizontale Komponente der Windrichtung |
| 39 | horizontale Komponente des Rotors |
| 40 | Belastungskurve |

41    Energiekurve

**Patentansprüche**

**1.** Verfahren zum Steuern einer Windkraftanlage mit einem durch Wind angetriebenen und um eine horizontal oder im Wesentlichen horizontal ausgerichtete Rotorachse (6) drehenden Rotor (5), der mehrere Rotorblätter (1, 2, 3) umfasst, die sich jeweils in Richtung einer quer oder im Wesentlichen quer zur Rotorachse verlaufenden Blattachse (11, 12, 13) erstrecken, um welche das jeweilige Rotorblatt (1, 2, 3) gedreht wird, wobei der Rotor (5) um eine vertikal oder im Wesentlichen vertikal ausgerichtete Gier-Achse (8) mit einer Gier-Winkelgeschwindigkeit ($\gamma$) gedreht wird, wodurch gyroskopische Belastungen der Rotorblätter (1, 2, 3) hervorgerufen werden,
**dadurch gekennzeichnet, dass**
durch Drehen der Rotorblätter (1, 2, 3) um ihre Blattachsen (11, 12, 13) in Abhängigkeit von der Gier-Winkelgeschwindigkeit ($\gamma$) oder von einer diese beeinflussenden Führungsgröße ($\gamma_c$) die gyroskopischen Belastungen der Rotorblätter (1, 2, 3) reduziert werden.

**2.** Verfahren nach Anspruch 1,
**dadurch gekennzeichnet, dass**
die Gier-Winkelgeschwindigkeit ($\gamma$) in Abhängigkeit von der Führungsgröße ($\gamma_c$) gesteuert oder geregelt wird.

**3.** Verfahren nach Anspruch 1 oder 2,
**dadurch gekennzeichnet, dass**
jedes Rotorblatt (1, 2, 3) um seine Blattachse (11, 12, 13) zusätzlich in Abhängigkeit von einem Rotationswinkel ($\beta_1$, $\beta_2$, $\beta_3$) gedreht wird, den die jeweilige Blattachse (11, 12, 13) mit einer vertikal oder im Wesentlichen vertikal ausgerichteten Geraden (15) einschließt.

**4.** Verfahren nach einem der vorangehenden Ansprüche,
**dadurch gekennzeichnet, dass**
die Rotorblätter (1, 2, 3) um ihre Blattachsen (11, 12, 13) zusätzlich in Abhängigkeit von einer von dem Wind an den Rotor (5) abgegebenen Leistung gedreht werden.

**5.** Verfahren nach einem der vorangehenden Ansprüche,
**dadurch gekennzeichnet, dass**
die Gier-Winkelgeschwindigkeit ($\gamma$) gemessen oder auf Basis einer Messung der Drehbewegung des Rotors (5) um die Gier-Achse (8) ermittelt wird.

**6.** Verfahren nach einem der vorangehenden Ansprüche,
**dadurch gekennzeichnet, dass**
Verdrehungen der Rotorblätter (1, 2, 3) um ihre Blattachsen (11, 12, 13) jeweils durch einen Blattwinkel ($\theta_1$, $\theta_2$, $\theta_3$) beschrieben werden,
für jedes Rotorblatt (1, 2, 3) ein von der Gier-Winkelgeschwindigkeit ($\gamma$) oder von der Führungsgröße ($\gamma_c$) abhängiger Soll-Blattwinkel ($\theta_{1c}$, $\theta_{2c}$, $\theta_{3c}$) bestimmt wird, der Blattwinkel ($\theta_1$, $\theta_2$, $\theta_3$) für jedes Rotorblatt (1, 2, 3) in Abhängigkeit von dem jeweiligen Soll-Blattwinkel ($\theta_{1c}$, $\theta_{2c}$, $\theta_{3c}$) gesteuert oder geregelt wird.

**7.** Verfahren nach Anspruch 6,
**dadurch gekennzeichnet, dass**
jeder Soll-Blattwinkel ($\theta_{1c}$, $\theta_{2c}$, $\theta_{3c}$) linear abhängig von der Gier-Winkelgeschwindigkeit ($\gamma$) oder von der Führungsgröße ($\gamma_c$) ist.

**8.** Verfahren nach Anspruche 6 oder 7,
**dadurch gekennzeichnet, dass**
jeder Soll-Blattwinkel ($\theta_{1c}$, $\theta_{2c}$, $\theta_{3c}$) durch eine Summe aus mehreren Summanden gebildet wird, von denen einer abhängig von der Gier-Winkelgeschwindigkeit ($\gamma$) oder von der Führungsgröße ($\gamma_c$) ist.

**9.** Verfahren nach Anspruch 8 und nach Anspruch 4,
**dadurch gekennzeichnet, dass**
ein anderer der Summanden ($\theta_{ncp}$) abhängig von der Leistung ist.

**10.** Verfahren nach Anspruch 3 und nach Anspruch 8 oder 9,
**dadurch gekennzeichnet, dass**
der eine von der Gier-Winkelgeschwindigkeit ($\gamma$) oder von der Führungsgröße ($\gamma_c$) abhängige Summand sich zyklisch mit dem Rotationswinkel des jeweiligen Rotorblatts ändert.

**11.** Verfahren nach Anspruch 3 oder 10,
**dadurch gekennzeichnet, dass**
jedes Rotorblatt (1, 2, 3) um seine Blattachse (11, 12, 13) in Abhängigkeit von dem Sinus oder dem Kosinus aus einem Winkel gedreht wird, der gleich dem jeweiligen Rotationswinkel oder gleich einer Summe aus dem jeweiligen Rotationswinkel und einem Phasenversatz für das jeweilige Rotorblatt ist.

**12.** Windkraftanlage mit
einem durch Wind antreibbaren und um eine horizontal oder im Wesentlichen horizontal ausgerichtete Rotorachse (6) drehbaren Rotor (5), der mehrere Rotorblätter (1, 2, 3) umfasst, die sich jeweils in Richtung einer quer oder im Wesentlichen quer zur Rotorachse (6) verlaufenden Blattachse (11, 12, 13) erstrecken,
einem Gier-Winkelverstellantrieb (25), mittels welchem der Rotor (5) um eine vertikal oder im Wesentlichen vertikal ausgerichtete Gier-Achse (8) mit einer Gier-Winkelgeschwindigkeit ($\gamma$) drehbar ist, wobei durch das Drehen des Rotors (5) um die Gier-Achse (8) gyroskopische Belastungen der Rotorblätter (1, 2, 3) hervorgerufen werden, Blattwinkelverstellantrieben (20, 21, 22), mittels welchen die Rotorblätter (1, 2, 3) um ihre Blattachsen (11, 12, 13) drehbar sind,
**gekennzeichnet durch**
eine den Gier-Winkelverstellantrieb (25) und die Blattwinkelverstellantriebe (20, 21, 22) umfassende Steuereinrichtung (16), mittels welcher **durch** Drehen der Rotorblätter (1, 2, 3) um ihre Blattachsen (11, 12, 13) in Abhängigkeit von der Gier-Winkelgeschwindigkeit ($\gamma$) oder von einer diese beeinflussenden Führungsgröße ($\gamma_c$) die gyroskopischen Belastungen der Rotorblätter (1, 2, 3) reduzierbar sind.

**13.** Windkraftanlage nach Anspruch 12,
**dadurch gekennzeichnet, dass**
die Gier-Winkelgeschwindigkeit ($\gamma$) mittels der Steuereinrichtung (16) in Abhängigkeit von der Führungsgröße ($\gamma_c$) steuerbar oder regelbar ist.

**14.** Windkraftanlage nach Anspruch 12 oder 13,
**dadurch gekennzeichnet, dass**
mittels der Steuereinrichtung (16) jedes Rotorblatt (1, 2, 3) um seine Blattachse (11, 12, 13) zusätzlich in Abhängigkeit von einem Rotationswinkel ($\beta_1$, $\beta_2$, $\beta_3$) drehbar ist, den die jeweilige Blattachse (11, 12, 13) mit einer vertikal oder im Wesentlichen vertikal ausgerichteten Geraden (15) einschließt, wobei die Steuereinrichtung (16) eine Rotationswinkelerfassungseinrichtung (26) umfasst, mittels welcher für zumindest eines der Rotorblätter (1, 2, 3) der Rotationswinkel ($\beta_1$, $\beta_2$, $\beta_3$) erfassbar ist.

**15.** Windkraftanlage nach einem der Ansprüche 12 bis 14,
**dadurch gekennzeichnet, dass**
die Steuereinrichtung (16) eine Leistungserfassungseinrichtung (28, 32) umfasst, mittels welcher eine von dem Wind an den Rotor (5) abgegebene Leistung ermittelbar ist, wobei die Rotorblätter (1, 2, 3) mittels der Steuereinrichtung (16) um ihre Blattachsen (11, 12, 13) zusätzlich in Abhängigkeit von der Leistung drehbar sind.

**Claims**

**1.** Method for controlling a wind turbine comprising a rotor (5) which can be driven by wind, can rotate about a horizontally or substantially horizontally aligned rotor axis (6) and comprises a plurality of rotor blades (1, 2, 3) which each extend in the direction of a blade axis (11, 12, 13) running transversely or substantially transversely to the rotor axis about which the respective rotor blade (1, 2, 3) is rotated, the rotor (5) being rotated about a vertically or substantially vertically aligned yaw axis (8), at a yaw angular velocity ($\gamma$), as a result of which gyroscopic loads are generated on the rotor blades (1, 2, 3), **characterised in that** by rotating the rotor blades (1, 2, 3) about their blade axes (11, 12, 13) subject to the yaw angular velocity ($\gamma$), or to a guide variable ($\gamma_c$) influencing said yaw angular velocity, the gyroscopic loads on the rotor blades (1, 2, 3) are reduced.

**2.** Method according to claim 1, **characterised in that** the yaw angular velocity ($\gamma$) is controlled or regulated subject to the guide variable ($\gamma_c$).

3. Method according to claim 1 or claim 2, **characterised in that** each rotor blade (1, 2, 3) is rotated about its blade axis (11, 12, 13) additionally subject to an angle of rotation ($\beta_1$, $\beta_2$, $\beta_3$) enclosed by the respective blade axis (11, 12, 13) by a vertically or substantially vertically aligned straight line (15).

4. Method according to any one of the preceding claims,
**characterised in that** the rotor blades (1, 2, 3) are rotated about their blade axes (11, 12, 13) additionally subject to a power which is delivered by the wind onto the rotor (5).

5. Method according to any one of the preceding claims, **characterised in that** the yaw angular velocity ($\gamma$) is measured or is determined based on a measurement of the rotational movement of the rotor (5) about the yaw axis (8).

6. Method according to any one of the preceding claims, **characterised in that** rotations of the rotor blades (1, 2, 3) about their blade axes (11, 12, 13) are described in each case by a blade angle ($\Theta_1$, $\Theta_2$, $\Theta_3$), **in that** a desired blade angle ($\Theta_{1c}$, $\Theta_{2c}$, $\Theta_{3c}$) which is subject to the yaw angular velocity ($\gamma$) or to the guide variable ($\gamma_c$), is determined for each rotor blade (1, 2, 3) **in that** the blade angle ($\Theta_1$, $\Theta_2$, $\Theta_3$) for each rotor blade (1, 2, 3) is controlled or regulated subject to the respective desired blade angle ($\Theta_{1c}$, $\Theta_{2c}$, $\Theta_{3c}$).

7. Method according to claim 6, **characterised in that** each desired blade angle ($\Theta_{1c}$, $\Theta_{2c}$, $\Theta_{3c}$) is linearly dependent on the yaw angular velocity ($\gamma$) or on the guide variable ($\gamma_c$).

8. Method according to claim 6 or claim 7, **characterised in that** each of the desired blade angles ($\Theta_{1c}$, $\Theta_{2c}$, $\Theta_{3c}$) is formed by a total of a plurality of summands, one of which is dependent on the yaw angular velocity ($\gamma$) or on the guide variable ($\gamma_c$).

9. Method according to claim 8 and to claim 4, **characterised in that** another of the summands ($\Theta_{ncp}$) is dependent on the power.

10. Method according to claim 3 and to claim 8 or 9, **characterised in that** the one summand dependent an the yaw angular velocity ($\gamma$) or an the guide variable ($\gamma_c$) changes cyclically with the angle of rotation of the respective rotor blade.

11. Method according to claim 3 or claim 10, **characterised in that** each rotor blade (1, 2, 3) is rotated about its blade axis (11, 12, 13) subject to the sine or cosine of an angle which is equal to the respective angle of rotation or is equal to a total of the respective angle of rotation and a phase shift for the respective rotor blade.

12. Wind turbine comprising a rotor (5) which can be driven by wind, can rotate about a horizontally or substantially horizontally aligned rotor axis (6) and comprises a plurality of rotor blades (1, 2, 3) which each extend in the direction of a blade axis (11, 12, 13) running transversely or substantially transversely to the rotor axis (6), a yaw angle adjusting drive (25) by which the rotor (5) can be rotated about a vertically or substantially vertically aligned yaw axis (8) at a yaw angular velocity ($\gamma$), gyroscopic loads being generated an the rotor blades (1, 2, 3) due to the rotation of the rotor (5) about the yaw axis (8), and blade angle adjusting drives (20, 21, 22), by which the rotor blades (1, 2, 3) can be rotated about their blade axes (11, 12, 13), **characterised by** a control means (16) comprising the yaw angle adjusting drive (25) and the blade angle adjusting drives (20, 21, 22), by which the gyroscopic loads an the rotor blades (1, 2, 3) can be reduced due to rotation of the rotor blades (1, 2, 3) about their blade axes (11, 12, 13) subject to the yaw angular velocity ($\gamma$) or to a guide variable ($\gamma c$) which influences said yaw angular velocity ($\gamma$).

13. Wind turbine according to claim 12, **characterised in that** the yaw angular velocity ($\gamma$) can be controlled or regulated by the control means (16) subject to the guide variable ($\gamma_c$).

14. Wind turbine according to claim 12 or claim 13, **characterised in that** each rotor blade (1, 2, 3) can be rotated about its blade axis (11, 12, 13) by the control means (16) additionally subject to an angle of rotation ($\beta_1$, $\beta_2$, $\beta_3$) enclosed by the respective blade axis (11, 12, 13) by a vertically or substantially vertically aligned straight line (15), the control means (16) comprising a rotation angle detection means (26) which can detect the angle of rotation ($\beta_1$, $\beta_2$, $\beta_3$) for at least one of the rotor blades (1, 2, 3).

15. Wind turbine according to any one of claims 12 to 14, **characterised in that** the control means (16) comprises a power detection means (28, 32) which can determine a power delivered by the wind onto the rotor (5), it being possible for the rotor blades (1, 2, 3) to be rotated by the control means (16) about their blade axes (11, 12, 13) additionally subject to the power.

**Revendications**

1. Procédé de commande d'une éolienne dotée d'un rotor (5) entraîné par le vent et se mettant en rotation autour d'un axe de rotor (6) orienté de manière horizontale ou essentiellement horizontale, ledit rotor comprenant plusieurs pales de rotor (1, 2, 3), qui s'étendent chacune en direction d'un axe de pale (11, 12, 13) s'étendant transversalement ou essentiellement transversalement par rapport à l'axe de rotor, autour duquel chaque pale de rotor (1, 2, 3) est mise en rotation, le rotor (5) étant mis en rotation autour d'un axe de lacet (8) orienté de manière verticale ou essentiellement verticale à une vitesse d'angle de lacet ($\dot{\gamma}$), entraînant ainsi des charges gyroscopiques au niveau des pales de rotor (1, 2, 3), **caractérisé en ce que** la mise en rotation des pales de rotor (1, 2, 3) autour de leurs axes de pale (11, 12, 13) en fonction de la vitesse d'angle de lacet ($\dot{\gamma}$) ou d'une de ces grandeurs de référence influentes ($\dot{\gamma}_c$) entraîne la réduction des charges gyroscopiques (1, 2, 3) des pales de rotor (1, 2, 3).

2. Procédé selon la revendication 1, **caractérisé en ce que** la vitesse d'angle de lacet ($\gamma$) est commandée ou réglée en fonction de la grandeur de référence ($\gamma_c$).

3. Procédé selon la revendication 1 ou 2, **caractérisé en ce que** chaque pale de rotor (1, 2, 3) est mise en rotation autour de son axe de pale (11, 12, 13) également en fonction d'un angle de rotation ($\beta_1$, $\beta_2$, $\beta_3$) qui inclut chaque axe de pale (11, 12, 13) avec une droite (15) orientée verticalement ou essentiellement verticalement.

4. Procédé selon l'une des revendications précédentes, **caractérisé en ce que** les pales de rotor (1, 2, 3) sont mises en rotation autour de leurs axes de pale (11, 12, 13) également en fonction d'une puissance émise par le vent sur le rotor (5).

5. Procédé selon l'une des revendications précédentes, **caractérisé en ce que** la vitesse d'angle de lacet ($\dot{\gamma}$) est mesurée ou déterminée sur la base d'une mesure de la rotation du rotor (5) autour de l'axe de lacet (8).

6. Procédé selon l'une des revendications précédentes, **caractérisé en ce que** les torsions des pales de rotor (1, 2, 3) autour de leurs axes de pale (11, 12, 12) sont décrites par un angle de pale ($\Theta_1$, $\Theta_2$, $\Theta_3$), pour chaque pale de rotor (1, 2, 3), un angle de pale théorique ($\Theta_{1c}$, $\Theta_{2c}$, $\Theta_{3c}$) dépendant de la vitesse d'angle de lacet ($\gamma$) ou de la grandeur de référence ($\gamma_c$) est déterminé, pour chaque pale de rotor (1, 2, 3), l'angle de pale ($\theta 1$, $\theta 2$, $\theta 3$) est commandé ou réglé en fonction de chaque angle de pale théorique ($\Theta_{1c}$, $\Theta_{2c}$, $\Theta_{3c}$).

7. Procédé selon la revendication 6, **caractérisé en ce que** chaque angle de pale théorique ($\Theta_{1c}$, $\Theta_{2c}$, $\Theta_{3c}$) est linéaire en fonction de la vitesse d'angle de lacet ($\gamma$) ou de la grandeur de référence ($\gamma_c$).

8. Procédé selon la revendication 6 ou 7, **caractérisé en ce que** chaque angle de pale théorique ($\Theta_{1c}$, $\Theta_{2c}$, $\Theta_{3c}$) est formé par une somme de plusieurs cumulandes, parmi lesquelles l'un dépend de la vitesse d'angle de lacet ($\gamma$) ou de la grandeur de référence ($\gamma_c$).

9. Procédé selon la revendication 8 ou selon la revendication 4, **caractérisé en ce qu'**une autre des cumulandes ($\Theta_{ncp}$) dépend de la puissance.

10. Procédé selon la revendication 3 ou selon la revendication 8 ou 9, **caractérisé en ce que** la cumulande dépendant de la vitesse d'angle de lacet ($\gamma$) ou de la grandeur de référence ($\gamma_c$) évolue de manière cyclique avec l'angle de rotation de chaque pale de rotor.

11. Procédé selon la revendication 3 ou 10, **caractérisé en ce que** chaque pale de rotor (1, 2, 3) est mise en rotation autour de son axe de pale (11, 12, 13) en fonction du sinus ou du cosinus d'un angle, qui est égal à chaque angle de rotation ou égal à une somme de chaque angle de rotation et d'un décalage de phase pour chaque pale de rotor.

12. Éolienne dotée

d'un rotor (5) pouvant être entraîné par le vent et pouvant se mettre en rotation autour d'un axe de rotor (6) orienté de manière horizontale ou essentiellement horizontale, ledit rotor comprenant plusieurs pales de rotor (1,2, 3), qui s'étendent chacune en direction d'un axe de pale (11, 12, 13) s'étendant transversalement ou essentiellement transversalement par rapport à l'axe de rotor, d'un dispositif d'entraînement de réglage d'angle de lacet (25), permettant de mettre en rotation le rotor (5) autour d'un axe de lacet (8) orienté verticalement ou essentiellement verticalement à une vitesse d'angle de lacet ($\gamma$), la mise en rotation du rotor (5) autour de l'axe de lacet (8) entraînant des charges gyroscopiques au niveau des pales de rotor (1, 2, 3), de dispositifs d'entraînement de réglage d'angle de pale (20, 21, 22), permettant de mettre en rotation les pales de rotor (1, 2, 3) autour de leurs axes de pale (11, 12, 13), **caractérisée par** un dispositif de commande (16) comprenant le dispositif d'entraînement de réglage d'angle de lacet (25) et les dispositifs d'entraînement de réglage d'angle de pale (20, 21, 22), au moyen duquel la mise en rotation des pales de rotor (1, 2, 3) autour de leurs axes de pale (11, 12, 13) en fonction de la vitesse d'angle de lacet ($\gamma$) ou d'une de ces grandeurs de référence influentes ($\gamma_c$) peut entraîner une réduction des charges gyroscopiques des pales de rotor (1, 2, 3).

13. Éolienne selon la revendication 12, **caractérisée en ce que** a vitesse d'angle de lacet ($\gamma$) peut être commandée ou réglée au moyen du dispositif de commande (16) en fonction de la grandeur de référence ($\gamma_c$).

14. Éolienne selon la revendication 12 ou 13, **caractérisée en ce que**, au moyen du dispositif de commande (16), chaque pale de rotor (1, 2, 3) peut être mise en rotation autour de son axe de pale (11, 12, 13) également en fonction d'un angle de rotation ($\beta_1$, $\beta_2$, $\beta_3$), qui inclut chaque axe de pale (11, 12, 13) avec une droite (15) orientée verticalement ou essentiellement verticalement, le dispositif de commande (16) comprenant un dispositif de détection d'angle de rotation (26) permettant de détecter l'angle de rotation ($\beta_1$, $\beta_2$, $\beta_3$) pour au moins une des pales de rotation (1, 2, 3).

15. Éolienne selon l'une des revendications 12 à 14, **caractérisée en ce que** le dispositif de commande (16) comprend un dispositif de détection de puissance (28, 32), permettant de déterminer une puissance émise par le vent sur le rotor (5), les pales de rotor (1, 2, 3) pouvant être mises en rotation au moyen du dispositif de commande (16) autour de leurs axes de pale (11, 12, 13) également en fonction de la puissance.

Fig. 1

14    6    8

33

Fig. 2

10

38

39    δ

5    Ψ

4

2    36    1

35

34

7

37

Fig. 3

Fig. 4

Fig. 5

Fig. 6

Fig. 7

Fig. 9

Fig. 8

Fig. 10

**EP 2 464 861 B1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 0995904 A2
- US 6361275 B1
- WO 0133075 A1
- WO 2004074681 A1
- WO 2008041066 A1
- WO 2008087180 A2
- US 7118339 B2
- WO 2008119351 A2
- WO 2008143009 A1
- US 20090068013 A1

### In der Beschreibung aufgeführte Nicht-Patentliteratur

- **T.F. PEDERSEN ; N.N. SØRENSEN ; L. VITA ; P. ENEVOLDSEN.** Optimization of Wind Turbine Operation by Use of Spinner Anemometer. *Bericht Risø-R-1654 (EN),* 2008
- **D.J. MALCOLM ; A.C. HANSEN.** WindPACT Turbine Rotor Design Study. *NREL/SR-500-32495,* 2002